# EUROPEAN PATENT APPLICATION

(11) **EP 4 246 415 A1**
(43) Date of publication of application: **20.09.2023**
(21) Application number: 23150562.9
(22) Date of filing: 06.01.2023
(51) Int. Cl.: G06Q 50/06, B60L 55/00

(54) **MANAGEMENT SYSTEM, DISPLAY DEVICE, AND INCENTIVE DISPLAY METHOD**

(30) Priority: 14.03.2022 JP 2022039152
(71) Applicant: TOYOTA JIDOSHA KABUSHIKI KAISHA, Aichi-Ken 471-8571 (JP)
(72) Inventor: HANASHIMA, Tateki, Toyota-shi, 471-8571 (JP)
(74) Representative: D Young & Co LLP

(57) **Abstract**

A management system includes: a management device (1000) that manages incentives given to an administrator who manages an electric power device that is electrically connectable to an external power supply; and a display device that displays the incentives received from the management device (1000). The management device (1000) includes a storage unit (210) that stores data on the incentives of the administrator, and an update unit (220) that updates the data stored in the storage unit in such a manner that, when the electric power device meets a predetermined requirement, an incentive corresponding to the requirement met is given to the administrator. The display device includes a classification unit (410) that classifies the incentives earned by the administrator according to situations, and a first display unit that displays the incentives classified according to each of the situations by the classification unit (410) in such a manner that the incentives for each situation are respectively identifiable.

## Description

### BACKGROUND OF THE INVENTION

### 1. Field of the Invention

The present disclosure relates to management systems, display devices, and incentive display methods.

### 2. Description of Related Art

An electric utility that manages an external power supply (e.g., power grid) sometimes request administrators of electric power devices (hereinafter also referred to as "consumers") to perform power balancing of the external power supply by demand response (DR). However, if the electric utility merely requests power balancing, few consumers will respond to the request. Therefore, a system has been adopted in which incentives (e.g., monetary or other rewards) are given to those consumers who responded to a request (hereinafter also referred to as "incentive kind power balancing system"). For example, a system is known in which an electric utility pays incentives to those consumers who responded to a power balancing request from the electric utility.

In order to encourage consumers to participate in power balancing, it is important to inform consumers of the benefits of participating in power balancing. For example, Japanese Unexamined Patent Application Publication No. 2019-159628 (JP 2019-159628 A) discloses a display device that calculates and displays a tentative incentive in order to inform a consumer of the progress of DR in real time.

### SUMMARY OF THE INVENTION

The display device described in JP 2019-159628 A can provide motivation to the consumer to respond to DR (power balancing request) by informing him or her of a tentative incentive in real time during DR. However, consumers do not always check an incentive during DR. Consumers do not participate in power balancing often due to their lifestyles. Even if the consumers can grasp the incentive in real time, they may not be in a situation where they can participate in power balancing. Therefore, further improvement is desired in user interfaces for use in the incentive kind power balancing system.

The present disclosure can solve the above problem, and can encourage consumers (administrators of electric power devices) to change their actions to respond to a power balancing request by a display device that displays incentives.

A management system according to a first aspect of the present disclosure includes: a management device that manages incentives given to an administrator who manages an electric power device that is electrically connectable to an external power supply; and a display device that displays the incentives received from the management device. The management device includes a storage unit that stores data on the incentives of the administrator, and an update unit that updates the data stored in the storage unit in such a manner that, when the electric power device meets a predetermined requirement, an incentive corresponding to the predetermined requirement that is met is given to the administrator. The display device includes a classification unit that classifies the incentives earned by the administrator according to situations, and a first display unit that displays the incentives classified according to the situations by the classification unit in such a manner that the incentives for each of the situations are identifiable.

It is not desirable for consumers (administrators of electric power devices) to feel obligated to respond to a power balancing request in a manner that affects their lives. There are situations where consumers can respond to a power balancing request and situations where they cannot respond to a power balancing request. When a consumer does not respond to a power balancing request even though he or she is in a situation where he or she can respond to the power balancing request, the consumer may be able to earn more incentives without affecting his or her own life in that situation. By slightly changing their actions, the consumers may be able to more easily respond to a power balancing request without affecting their own lives too much, and as a result may be able to earn more incentives. For example, if an electric power device could not perform power balancing because a consumer had forgotten to plug it in, the consumer may be able to earn an incentive with that electric power device simply by plugging it in advance.

In the above management system, the display device displays incentives received from the management device. The first display unit of the display device is configured to display incentives in such a manner that the incentives for each of the situations are identifiable. The consumer (administrator of the electric power device) can thus grasp the achievement of incentives for each of the situations. The consumer can also consider how he or she can change his or her actions to earn more incentives for each of the situations without affecting his or her life too much. As described above, according to the above management system, the display device that displays incentives can encourage the consumer to change his or her actions to respond to a power balancing request. The consumer can decide his or her actions after comparing and considering his or her lifestyle and the achievement of incentives.

The first display unit may display incentives for each of the situations (plurality of kinds of incentives) together or separately. For example, the first display unit may display the incentives for the different situations on separate screens by switching between or among screens in response to a request from a user. Alternatively, the first display unit may display the incentives for the different situations on the same screen in such a manner that they are distinguishable from each other.

The display device may serve as a user interface (more specifically, Human Machine Interface (HMI) for the consumer) in an incentive kind power balancing system. The power balancing request may be made by demand response (DR). The management device may send a signal requesting power balancing to the consumer's terminal (e.g., terminal including the display device). The management device may send a signal indicating an incentive (actual value) earned by the consumer and the situation at that time to the consumer's terminal (e.g., terminal including the display device) that responded to a power balancing request.

The management device may be one computer, or may be composed of a plurality of computers that can communicate with each other. The external power supply may be an electrical network installed in a predetermined area. The external power supply may supply alternating current (AC) power or direct current (DC) power.

In the management system according to the above aspect, the electric power device may be a moving object equipped with an energy storage device. The update unit may give a first incentive to the administrator of the electric power device when the moving object is electrically connected to the external power supply. The update unit may give a second incentive to the administrator of the electric power device when the moving object electrically connected to the external power supply performs power balancing of the external power supply. The first display unit may be configured to display the first incentive and the second incentive in such a manner that the first incentive and the second incentive are respectively identifiable.

The moving object (e.g., vehicle or drone) is not connected to the external power supply while the moving object is in operation. The moving object is connected to the external power supply when power is transferred between the moving object and the external power supply. When the consumer responds to a power balancing request using the moving object, the moving object is electrically connected to the external power supply and then performs power balancing according to the request.

Demonstration experiments conducted by the inventors of the present application showed there were cases where power balancing according to the request was not performed by the moving objects because the consumers had forgotten to connect the moving objects to the external power supply. In the above configuration, an incentive (first incentive) is given to the consumer when the consumer merely connects the moving object to the external power supply. Such an incentive can motivate the consumer to connect the moving object to the external power supply. This configuration can reduce non-participation in power balancing due to forgetting to connect the moving object to the external power supply as described above. A further incentive (second incentive) is given to the consumer when the moving object performs power balancing of the external power supply. Such an incentive can motivate the consumer to respond to a power balancing request. This configuration can thus encourage the consumer to participate in power balancing.

In the management system according to the above aspect, the external power supply may be a power grid. The electric power device may be a vehicle including a charge port through which power from outside the vehicle is input, an energy storage device, and a charge circuit that charges the energy storage device with the power input through the charge port. The display device may be mounted on a mobile terminal of the administrator or on the vehicle. The update unit may give a first incentive to the administrator when the charge port is electrically connected to the power grid. The update unit may give a second incentive to the administrator when the vehicle with the charge port electrically connected to the power grid charges the energy storage device to perform power balancing of the power grid. The first display unit may be configured to display the first incentive and the second incentive in such a manner that the first incentive and second incentive are respectively identifiable.

In the above management system, the electric power device is a vehicle equipped with an energy storage device. The energy storage device is configured to be charged with power from the power grid. Such a vehicle can perform power balancing of the power grid by charging the energy storage device. In the above management system, the display device is mounted on the mobile terminal of the administrator (vehicle administrator) or on the vehicle. This makes it easier for the vehicle administrator to check information displayed on the display device. In the above management system, the use of the first and second incentives encourages the consumer to participate in power balancing and at the same time reduces non-participation in power balancing due to forgetting to connect the vehicle to the external power supply (forgetting to plug in the vehicle).

The vehicle may be an electrified vehicle (hereinafter also referred to as "xEV") that uses electric power as all or part of its power source. The xEVs include battery electric vehicles (BEVs), plug-in hybrid electric vehicles (PHEVs), fuel cell electric vehicles (FCEVs), and range extender electric vehicles (range extender EVs).

In the management system according to the above aspect, the vehicle may include a discharge port through which power is output to outside the vehicle and a discharge circuit that discharges power in the energy storage device to outside the vehicle through the discharge port. The update unit may give a third incentive to the administrator when the vehicle with the discharge port electrically connected to the power grid discharges the energy storage device to perform power balancing of the power grid. The first display unit may display the second incentive and the third incentive in such a manner that the second incentive and the third incentive are respectively identifiable.

In the above management system, the energy storage device mounted on the vehicle is configured to discharge power to the power grid outside the vehicle. Such a vehicle can perform power balancing of the power grid by discharging the energy storage device. The use of the third incentive can encourage the consumer to participate in power balancing.

The charge port and the discharge port may be a common plug inlet. The vehicle may include a single charge and discharge port that serves as both a charge port and a discharge port, and a charger-discharger that serves as both a charge circuit and a discharge circuit. Alternatively, the charge port may be changed to a charge and discharge port by attaching an adapter (e.g., a charge and discharge connector with a predetermined built-in circuit) to the charge port.

In the management system according to the above aspect, the vehicle may further include a control device that controls the charge circuit. The control device may permit remote charge control of the energy storage device by the management device in a predetermined charge mode (hereinafter also referred to as "permission mode"). The management device may determine a charge schedule for the permission mode and send to the display device the charge schedule that is determined. The display device may further include a second display unit that displays the charge schedule.

In the above management system, the second display unit of the display device displays a charge schedule determined by the management device. The consumer can look at the charge schedule displayed on the display device and consider how he or she can change his or her actions to earn more incentives without affecting his or her life too much. When the vehicle's preparation for power balancing has been completed during a charge period indicated by the charge schedule (period from charge start time to charge end time), the management device can perform power balancing of the power grid by the remote charge control of the energy storage device. The above configuration makes it easier for the management device to perform power balancing of the power grid.

In the management system according to the above aspect, the management device may further include a prediction unit that performs movement prediction of the vehicle. The permission mode may include a first charge mode and a second charge mode. The management device may be configured to determine the charge schedule for the first charge mode without using a result of the movement prediction, and determine the charge schedule for the second charge mode by using the result of the movement prediction.

For the second charge mode, the management device determines a charge schedule by using the result of the movement prediction. With this configuration, a charge schedule is automatically created according to the predicted movement schedule of the vehicle. Since the charge schedule is determined according to the movement of the vehicle, the vehicle can more easily participate in power balancing of the power grid. However, the accuracy of movement prediction by the management device is not always high enough. For example, in a form in which the management device improves prediction accuracy through learning, the prediction accuracy is initially low, and improves as learning progresses. Therefore, in the above configuration, the first charge mode is prepared separately from the second charge mode. For the first charge mode, the management device determines a charge schedule without using the result of the movement prediction. This configuration can avoid a charge schedule being determined based on wrong movement prediction by setting the first charge mode in the control device of the vehicle when, for example, the accuracy of movement prediction by the management device is low.

In any of the above management systems, the management device may send to the display device a recommended charge timeframe in which an incentive is expected to be earned for charging the electric power device. The display device may further include a third display unit that displays the recommended charge timeframe received from the management device.

In the above management system, the third display unit of the display device displays a recommended charge timeframe. Such display can encourage the administrator of the electric power device to charge the electric power device during the recommended charge timeframe.

In any of the above management systems, the display device may further include a fourth display unit that displays a maximum incentive estimated to have been earnable by the administrator and cause why the incentives earned by the administrator did not reach the maximum incentive.

As described above, informing the administrator of the electric power device of the cause why the incentive could not be earned can encourage the administrator to change his or her actions to respond to a power balancing request.

A display device according to a second aspect of the present disclosure is configured to display incentives given to an administrator who manages an electric power device that is available for power balancing. The display device includes: a classification unit that classifies the incentives earned by the administrator into a first situation incentive earned in a first situation and a second situation incentive earned in a second situation different from the first situation; and a display unit that displays the first situation incentive and the second situation incentive in such a manner that the first situation incentive and the second situation incentive are respectively identifiable.

The display device classifies incentives earned by the administrator according to situations and displays the incentives in such a manner that the incentives for each of the situations are identifiable. Such a display device can encourage the consumer (administrator of the electric power device) to change his or her actions to respond to a power balancing request.

In the display device according to the above aspect, the first situation may be a situation where an incentive is given to the administrator at a first rate. The second situation may be a situation where an incentive is given to the administrator at a second rate higher than the first rate.

According to the above configuration, the consumer can grasp the achievement (earned incentives) for each incentive rate. The consumer is therefore more likely to change his or her actions so that he or she can earn more incentives. Examples of the incentive rate include an incentive per unit power, an incentive per unit energy (e.g., yen per kilowatt hour (kWh), dollar per kilowatt hour (kWh), euro per kilowatt hour (kWh), Renminbi per kilowatt hour (kWh)), and an incentive per unit time (e.g., yen per minute, dollar per minute, euro per minute, Renminbi per minute).

In the display device according to the above aspect, the first situation may be a situation where the administrator was requested to charge the electric power device. The second situation may be a situation where the administrator was requested to discharge the electric power device.

According to the above configuration, the consumer can grasp the achievement (earned incentives) for each of the charge request and the discharge request. The consumer is therefore more likely to change his or her actions so that he or she can earn more incentives. For example, in a form in which the electric power device includes an energy storage device, the charge request cannot be fulfilled when the SOC of the energy storage device is too high, and the discharge request cannot be fulfilled when the SOC of the energy storage device is too low. In this form, it may be easier for the consumer to respond to both the charge and discharge requests by consciously adjusting the SOC of the energy storage device. As used herein, the term "SOC" means "state of charge." The SOC indicates the remaining capacity of the energy storage device. For example, the SOC is the ratio of the available capacity to the capacity in the fully charged state and varies between 0% and 100%.

In the display device according to the above aspect, the first situation may be a situation where the electric power device did not perform power balancing. The second situation may be a situation where the electric power device performed power balancing.

There are cases where an incentive is given to the consumer if a predetermined requirement is met even when the consumer did not perform power balancing using the electric power device. According to the above configuration, incentives given to the consumer for the electric power device having performed power balancing are displayed in such a manner that they can be identifiable. This makes it easier for the consumer to grasp the achievement of power balancing (incentives earned by power balancing). Such display can encourage the consumer to change his or her actions to respond to a power balancing request.

An incentive display method according to a third aspect of the present disclosure includes: receiving incentives earned by an administrator who manages an electric power device that is available for power balancing; and displaying to the administrator the incentives received in such a manner that the incentives for each situation are identifiable.

In the incentive display method according to the above aspect, the incentive display method may be performed on a display device, and the incentives may be received from a management device. In other words, the incentive display method may include, a management device sending to a display device incentives earned by an administrator who manages an electric power device that is available for power balancing; and the display device displaying to the administrator the incentives received from the management device in such a manner that the incentives for each situation are identifiable.

Like the above management system, in the above incentive display method as well, the display device that displays an incentive can encourage the consumer (administrator of the electric power device) to change his or her actions to respond to a power balancing request.

According to the present disclosure, the display device that displays an incentive can encourage the consumer (administrator of the electric power device) to change his or her actions to respond to a power balancing request.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a schematic configuration of a management system according to an embodiment of the present disclosure;
FIG. 2 shows the configurations of a vehicle and an EVSE unit shown in FIG. 1;
FIG. 3 illustrates the configuration of a display device (mobile terminal) according to the embodiment of the present disclosure and a screen A displayed on the display device;
FIG. 4 illustrates a screen B displayed on the display device according to the embodiment of the present disclosure;
FIG. 5 illustrates a charge schedule screen displayed on the display device according to the embodiment of the present disclosure;
FIG. 6 illustrates a screen C displayed on the display device according to the embodiment of this disclosure;
FIG. 7 illustrates a charge timer setting screen displayed on the display device according to the embodiment of the present disclosure;
FIG. 8 illustrates a scheduling registration screen displayed on the display device according to the embodiment of the present disclosure;
FIG. 9 illustrates a schedule change screen displayed on the display device according to the embodiment of the present disclosure;
FIG. 10 illustrates a VPP setting screen displayed on the display device according to the embodiment of the present disclosure;
FIG. 11 illustrates an other settings screen displayed on the display device according to the embodiment of the present disclosure;
FIG. 12 illustrates a screen D displayed on the display device according to the embodiment of the present disclosure;
FIG. 13 is a graph showing incentives earned by an administrator of an electric power device during a first period on the screen D shown in FIG. 12;
FIG. 14 is a graph showing incentives earned by the administrator of the electric power device during a second period on the screen D shown in FIG. 12;
FIG. 15 is a graph showing incentives earned by the administrator of the electric power device during a third period on the screen D shown in FIG. 12;
FIG. 16 shows a first modification of the incentive display mode shown in FIG. 15;
FIG. 17 shows a second modification of the incentive display mode shown in FIG. 15;
FIG. 18 shows a third modification of the incentive display mode shown in FIG. 15; and
FIG. 19 shows a modification of the incentive display mode shown in FIG. 13.

### DETAILED DESCRIPTION OF EMBODIMENTS

An embodiment of the present disclosure will be described in detail with reference to the drawings. The same or corresponding parts are denoted by the same signs throughout the drawings, and description thereof will not be repeated.

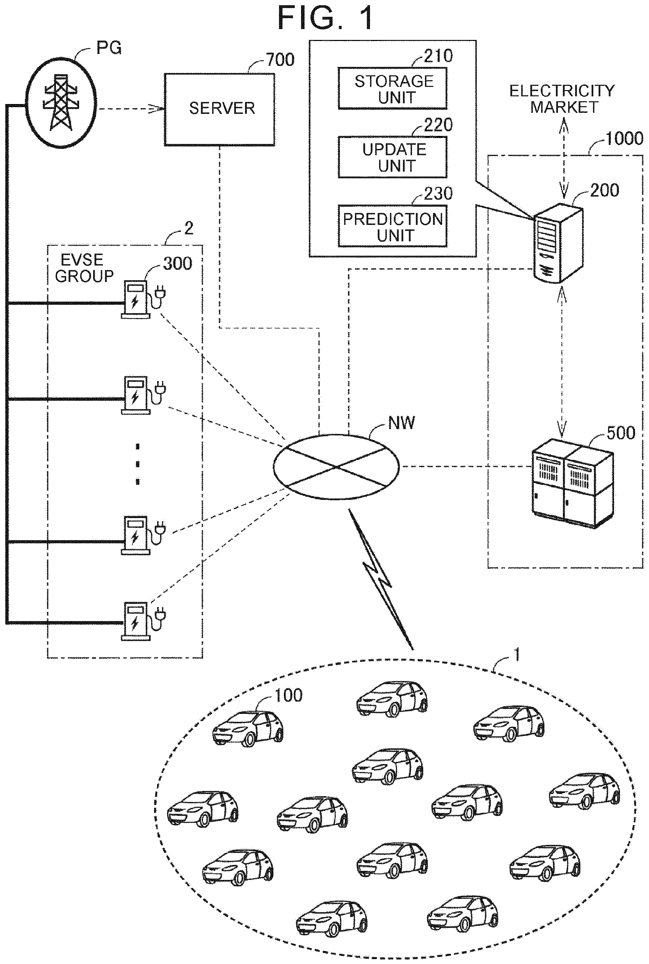

FIG. 1 shows a schematic configuration of a management system according to an embodiment of the present disclosure. Referring to FIG. 1, the management system according to the present embodiment includes a vehicle group 1, an EVSE group 2, a server 700, and a management device 1000. The management device 1000 includes servers 200, 500. EVSE stands for electric vehicle supply equipment.

Each of the servers 200, 500, and 700 is, for example, a computer equipped with a Human Machine Interface (HMI) and a communication interface (I/F). Each computer includes a processor and a storage device. The storage device stores, in addition to programs to be executed by the processor, information to be used in the programs (e.g., maps, mathematical formulas, and various parameters). The HMI includes an input device and a display device. The HMI may be a touch panel display.

A power grid PG is an electrical network formed by power transmission and distribution equipment. A plurality of power plants is connected to the power grid PG. Electric power is supplied from the power plants to the power grid PG. In the present embodiment, an electric power company maintains and manages the power grid PG (commercial power supply). The electric power company is a transmission system operator (TSO) (grid operator). The power grid PG supplies alternating current (AC) power (e.g., three-phase AC power). The server 700 is a computer belonging to the TSO. The server 700 may include a central load dispatching system (system of a central load dispatching center) and a simple command system. The power grid PG according to the present embodiment is an example of the "external power supply" according to the present disclosure.

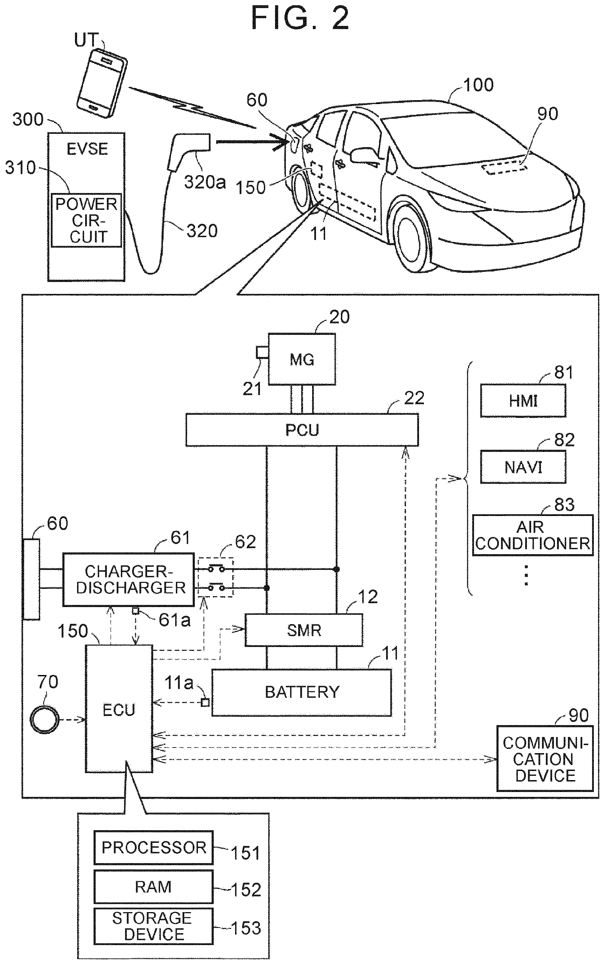

The server 500 periodically communicates with each vehicle in the vehicle group 1. In the present embodiment, each vehicle in the vehicle group 1 is an electrified vehicle (xEV), and is operable as a balancing power for the power grid PG. The vehicles in the vehicle group 1 are privately owned vehicles (POV) owned by individuals, and is an example of the "electric power device" according to the present disclosure. A user of a vehicle is an administrator who manages the vehicle. The number of vehicles in the vehicle group 1 may be five or more and less than 30, 30 or more and less than 100, or 100 or more. It is assumed in the present embodiment that the vehicle group 1 includes about 50 vehicles. The vehicle group 1 includes a vehicle 100 having a configuration that will be described below (see FIG. 2). The vehicle 100 may have the same configuration as or a different configuration from the other vehicles in the vehicle group 1.

The EVSE group 2 includes a plurality of EVSE units that is supplied with power from the power grid PG. The server 200 communicates with the EVSE units as necessary. The EVSE group 2 includes an EVSE unit 300 having a configuration that will be described later (see FIG. 2). The EVSE group 2 may include a plurality of kinds of EVSE units (e.g., normal chargers and fast chargers). The EVSE units may include both public EVSE units (e.g., EVSE units installed in commercial facilities, car dealerships, or expressway rest areas) and non-public EVSE units (e.g., home EVSE units). The EVSE group 2 may include any number of EVSE units.

The management device 1000, the server 700, vehicles in the vehicle group 1, and EVSE units in the EVSE group 2 are configured to communicate with each other via a communication network NW. The server 700 communicates with the server 200 via the communication network NW. In the management device 1000, the servers 200, 500 are configured to communicate with each other. The communication network NW is a wide area network formed by, for example, the Internet and wireless base stations. Each vehicle is configured to access and connect to the communication network NW by wireless communication. Each EVSE unit is connected to the communication network NW via, for example, a communication line. The form of communication is not limited to the above, and can be changed as appropriate. For example, each EVSE unit may be connected to the communication network NW by wireless communication.

FIG. 2 shows the configurations of the vehicle 100 and the EVSE unit 300. Referring to FIG. 2, the EVSE unit 300 is configured to be supplied with power from the power grid PG and to supply power. The EVSE unit 300 includes a built-in power circuit 310 and is equipped with a charging cable 320. The power circuit 310 is electrically connected to the power grid PG. The charging cable 320 includes a connector 320a (plug) at its distal end, and includes a communication line and a power line inside. One electrical wire may serve as both the communication line and the power line. The power circuit 310 converts the power supplied from the power grid PG to power suitable for supply to the vehicle 100, and outputs the converted power to the charging cable 320. The EVSE unit 300 outputs the power to be supplied to the vehicle 100 from the connector 320a.

The vehicle 100 includes an inlet 60 configured so that the connector 320a can be connected to and disconnected from the inlet 60. The inlet 60 may be a charge port, or may be a charge and discharge port that serves as both a charge port and a discharge port. The vehicle 100 is electrically connected to the power grid PG via the EVSE unit 300 when the connector 320a of the charging cable 320 connected to the body of the EVSE unit 300 is connected to the inlet 60 of the vehicle 100 in a parked state (hereinafter also referred to as "plugged-in state"). The vehicle 100 is not electrically connected to the EVSE unit 300 and the power grid PG while, for example, the vehicle 100 is traveling (hereinafter also referred to as "plugged-out state"). FIG. 2 shows only the inlet 60 compatible with the power supply method of the EVSE unit 300. However, the vehicle 100 may include a plurality of inlets so as to be compatible with a plurality of kinds of power supply methods (e.g., alternating current (AC) and direct current (DC) methods).

The vehicle 100 further includes a battery 11, a system main relay (SMR) 12, a motor generator (MG) 20, a power control unit (PCU) 22, and an electronic control unit (ECU) 150. The ECU 150 includes a processor 151, a random access memory (RAM) 152, and a storage device 153. The ECU 150 may be a computer. The processor 151 may be a central processing unit (CPU). The RAM 152 serves as a working memory that temporarily stores data to be processed by the processor 151. The storage device 153 is configured to save stored information. The storage device 153 stores, in addition to programs, information to be used in the programs (e.g., maps, mathematical formulas, and various parameters). In the present embodiment, various controls in the ECU 150 (e.g., charge control and discharge control for the battery 11) are performed as the processor 151 executes the programs stored in the storage device 153.

The battery 11 stores power for traveling of the vehicle 100. The vehicle 100 is configured to travel on the power stored in the battery 11. The vehicle 100 according to the present embodiment is a battery electric vehicle (BEV) without an engine (internal combustion engine). The battery 11 can be a known energy storage device for vehicles (e.g., liquid secondary battery, all-solid-state secondary battery, or assembled battery). Examples of a secondary battery for vehicles include a lithium-ion battery and a nickel metal hydride battery. The battery 11 according to the present embodiment is an example of the "energy storage device" according to the present disclosure.

The vehicle 100 further includes a monitoring module 11a that monitors the state of the battery 11. The monitoring module 11a includes various sensors that detect the state of the battery 11 (e.g., voltage, current, and temperature). The monitoring module 11a outputs the detection results to the ECU 150. The monitoring module 11a may be a battery management system (BMS) having a state of charge (SOC) estimation function, a state of health (SOH) estimation function, a cell voltage equalization function, a diagnostic function, and a communication function, in addition to the above sensor function. The ECU 150 can acquire the state of the battery 11 (e.g., temperature, current, voltage, SOC, and internal resistance) based on the output of the monitoring module 11a.

The vehicle 100 further includes a charger-discharger 61 and a charge and discharge relay 62. The charger-discharger 61 and the charge and discharge relay 62 are located between the inlet 60 and the battery 11. The charger-discharger 61 and the charge and discharge relay 62 are controlled by the ECU 150. In the present embodiment, a charge and discharge line including the inlet 60, the charger-discharger 61, and the charge and discharge relay 62 is connected between the SMR 12 and the PCU 22. However, the present disclosure is not limited to this, and the charge and discharge line may be connected between the battery 11 and the SMR 12.

In the present embodiment, the charger-discharger 61 serves as both a charge circuit and a discharge circuit. The charger-discharger 61 charges the battery 11 with power input from outside the vehicle to the inlet 60. The charger-discharger 61 discharges the power of the battery 11 to outside the vehicle through the inlet 60. The charger-discharger 61 includes a power converter circuit. The power converter circuit includes, for example, a bidirectional inverter. The power converter circuit may bidirectionally perform conversion between direct current (DC) and alternating current (AC). The charge and discharge relay 62 connects and disconnects the electrical path from the inlet 60 to the battery 11. The vehicle 100 further includes a monitoring module 61a that monitors the state of the charger-discharger 61. The monitoring module 61a includes various sensors that detect the state of the charger-discharger 61 (e.g., current sensor and voltage sensor), and outputs the detection results to the ECU 150.

The vehicle 100 in the plugged-in state can perform an external charge (i.e., charge of the battery 11 with power from outside the vehicle) and external power supply (i.e., supply of power of the battery 11 to outside the vehicle). The vehicle 100 can perform power balancing of the power grid PG by the external charge and external power supply. For example, the power for the external charge is supplied from the power grid PG to the inlet 60 through the charging cable 320 of the EVSE unit 300. The charger-discharger 61 converts the power received by the inlet 60 (e.g., AC power) to power suitable for charging the battery 11 (e.g., DC power), and outputs the converted power to the battery 11. The power for the external power supply is supplied from the battery 11 to the charger-discharger 61. The charger-discharger 61 converts the DC power supplied from the battery 11 to power suitable for the external power supply (e.g., AC power), and outputs the converted power to the inlet 60. The vehicle 100 is configured to provide reverse power flow to the power grid PG (that is, power is supplied from the vehicle 100 to the power grid PG). When either the external charge or the external power supply is performed, the charger and discharge relay 62 is closed (connected). When neither the external charge nor the external power supply is performed, the charge and discharge relay 62 is opened (disconnected).

The MG 20 is, for example, a three-phase AC motor generator. The MG 20 serves as a traction motor of the vehicle 100. The MG 20 is driven by the PCU 22 and rotates drive wheels of the vehicle 100. The MG 20 generates regenerative power and supplies the generated regenerative power to the battery 11. The vehicle 100 further includes a motor sensor 21 that monitors the state of the MG 20. The motor sensor 21 includes various sensors that detect the state of the MG 20 (e.g., current sensor, voltage sensor, and temperature sensor), and outputs the detection results to the ECU 150. The vehicle 100 may include any number of traction motors. The vehicle 100 may include one traction motor, two traction motors, or three or more traction motors. The traction motor may be an in-wheel motor.

The PCU 22 drives the MG 20 by using the power supplied from the battery 11. The SMR 12 connects and disconnects the electrical path from the battery 11 to the PCU 22. The PCU 22 includes, for example, an inverter and a converter. The SMR 12 and the PCU 22 are controlled by the ECU 150. The SMR 12 is closed (connected) when the vehicle 100 is traveling. The SMR 12 is also closed when power is transferred between the battery 11 and the inlet 60 (and outside the vehicle).

The vehicle 100 further includes an HMI 81, a navigation system (hereinafter referred to as "NAVI") 82, an air conditioner 83, and a communication device 90. The battery 11 also directly or indirectly supplies power to these devices (auxiliaries).

The HMI 81 includes an input device and a display device. The HMI 81 may include a touch panel display. The HMI 81 may include a meter panel and/or a head-up display. The HMI 81 may include a smart speaker that receives voice input.

The NAVI 82 includes a touch panel display, a Global Positioning System (GPS) module, and a storage device (none of which are shown in the drawings). The storage device stores map information. The touch panel display receives input from the user in the vehicle and displays a map and other information. The GPS module is configured to receive a signal from GPS satellites, not shown in the drawings (hereinafter referred to as "GPS signal"). The NAVI 82 detects the location of the vehicle 100 using the GPS signal. The NAVI 82 is configured to display the location of the vehicle 100 in real time on the map. The NAVI 82 performs a route search for finding an optimal route (e.g., shortest route) from the current location of the vehicle 100 to the destination by referring to the map information. The NAVI 82 may update the map information by Over The Air (OTA) successively.

The air conditioner 83 includes an air conditioner fan, a filter, a temperature control unit, a temperature sensor, and a control device. The temperature control unit may include an evaporator, a heater core, and an air mix door. The temperature sensor detects the temperature inside the cabin of the vehicle 100. In the air conditioner 83, air blown by the air conditioner fan passes through the filter, and the temperature of the air is controlled by the temperature control unit. The air conditioner 83 blows temperature-controlled air into the cabin of the vehicle 100. The control device of the air conditioner 83 controls the air conditioner fan and the temperature control unit so that the temperature inside the cabin of the vehicle 100 as detected by the temperature sensor becomes a predetermined target temperature. The target temperature is set by the ECU 150. The ECU 150 sends a control signal to the air conditioner 83. The air conditioner 83 is operated and stopped by the ECU 150.

The communication device 90 includes various communication I/Fs. The ECU 150 communicates with devices outside the vehicle 100 through the communication device 90. The communication device 90 includes a wireless communication device that can access the communication network NW (e.g., Data Communication Module (DCM)). The wireless communication device may include a communication I/F compatible with the fifth or sixth generation mobile communication system (5G or 6G). For example, the vehicle 100 wirelessly communicates with the servers 200, 500 both in the plugged-in state and in the plugged-out state. In the present embodiment, the vehicle 100 receives commands or notifications from the servers 200, 500 by the wireless communication device. However, the present disclosure is not limited to this, and the vehicle 100 may communicate wired with the servers 200, 500 via the EVSE unit 300 when in the plugged-in state.

The mobile terminal UT is a terminal carried by the user of the vehicle 100. In the present embodiment, the mobile terminal UT is a smartphone with a touch panel display. The smartphone includes a built-in computer. The communication device 90 includes a communication I/F for direct communication with the mobile terminal UT located inside the vehicle or within a range around the vehicle. The communication device 90 and the mobile terminal UT may perform short-range communication such as a wireless local area network (LAN), near field communication (NFC), or Bluetooth (registered trademark). The mobile terminal UT may be any mobile terminal, and may be such as laptop, tablet terminal, wearable device (e.g., smart watch or smart glasses), or electronic key. Any communication method can be used for communication between the vehicle 100 and the mobile terminal UT.

The mobile terminal UT is registered in advance in the servers 200, 500 and is configured to wirelessly communicate with the servers 200, 500. A predetermined application software (hereinafter referred to as "mobile app") is installed in the mobile terminal UT. The servers 200, 500 are configured to perform predetermined authentication before starting communication with a mobile terminal, and communicates only with those mobile terminals that have been successfully authenticated. This reduces the risk of unauthorized communication by mobile terminals not registered in the servers 200, 500. The user of the vehicle 100 can start communication with the servers 200, 500 by entering predetermined authentication information (information for successful authentication) to the mobile terminal UT. The entry of the predetermined authentication information can be skipped by registering the authentication information in the mobile app in advance. The mobile terminal UT can send and receive information to and from the servers 200, 500 via the mobile app.

In the present embodiment, the mobile terminal UT includes a location sensor. The location sensor may be a sensor using a GPS. The mobile terminal UT sends information indicating the location of the user (hereinafter also referred to as "user location information") to the server 500 periodically or in response to a request from the server 500.

A vehicle system including the ECU 150 (system that controls the vehicle 100) is turned on (operated) and off (stopped) as the user operates a start switch 70. The start switch 70 is mounted in the cabin of the vehicle 100 for example. The vehicle system is started when the start switch 70 is turned on. The vehicle system is stopped when the start switch 70 is turned off while the vehicle system is in operation. An operation of turning off the start switch 70 is prohibited while the vehicle 100 is traveling. The start switch of the vehicle is commonly referred to as "power switch" or "ignition switch" etc.

Referring back to FIG. 1, the server 200 is a computer belonging to an aggregator. An aggregator is an electric utility that bundles a plurality of distributed energy resources (DERs) to provide an energy management service. Each vehicle in the vehicle group 1 can serve as a DER. The server 200 may cause a plurality of DERs (e.g., each vehicle in the vehicle group 1) to serve as a virtual power plant (VPP) by remotely and integratedly controlling the DERs. The server 500 may belong to the aggregator, or may belong to an automaker.

The server 200 may perform demand response (DR) for each DER in order to integratedly control the DERs as a VPP. Power balancing of the power grid PG is requested to the DERs by DR. The server 200 may use DR to cause a plurality of DERs (e.g., each vehicle in the vehicle group 1) to perform power balancing of the power grid PG requested from the server 700 or power balancing of the power grid PG successfully won on the electricity market.

By the DERs participating in DR (power balancing), flexibility and adequacy is given to the power grid PG. Administrators of the DERs participating in DR permit the server 200 to remotely control the DERs. In the situation where the server 200 is permitted to remotely control the DERs, the server 200 can cause the DERs (e.g., the battery 11 of the vehicle 100) to charge or discharge for power balancing of the power grid PG by remote control. When an imbalance occurs in terms of power balancing of the power grid PG, the server 200 controls the DERs to eliminate the imbalance. For example, in the vehicle 100, the ECU 150 controls the charger-discharger 61 according to a command from the server 200. However, even when the server 200 sends commands to the DERs, the DERs cannot perform power balancing by remote control if preparations of the DERs for power balancing are not completed. Therefore, the administrator of each DER participating in DR is required to complete the preparation of the DER before DR starts.

Any kind of power balancing can be performed. Power balancing may be, for example, supply and demand balancing, power supply stabilization, load following, or frequency balancing. The DERs may act as balancing powers or reserves for the power grid PG by remote control.

The server 200 sends a DR request signal to each vehicle in the vehicle group 1 before starting DR for the VPP described above. The DR request signal requests participation in DR (power balancing). The DR request signal includes the kind of DR (e.g., downward DR or upward DR) and a DR period (DR start time and DR end time). Upward DR is basically DR that requests a demand increase. However, when the DERs receiving a request are power generating equipment, upward DR may request supply curtailment to the DERs. Downward DR is DR that requests a demand reduction or reverse power flow.

The server 500 holds information on each vehicle in the vehicle group 1 (hereinafter also referred to as "vehicle information"). The vehicle information is saved in the storage device of the server 500 and is updated successively. The server 500 periodically communicates with each vehicle in the vehicle group 1 and receives the vehicle information from each vehicle successively. The server 500 updates the vehicle information in the storage device based on the received latest vehicle information. The vehicle information is distinguished by vehicle IDs (vehicles' identification information). The vehicle information includes, for example, a charging location, user location information (location of the vehicle user), location information of the vehicle, SOC of the in-vehicle battery, grid connection state (plugged-in state, plugged-out state), state of the vehicle system (ON, OFF), information set in the navigation system (e.g., travel route to the destination), trip history data of the vehicle (e.g., data in which the location of the vehicle is associated with time for the vehicle's daily trips), and history data on actions of the vehicle user. When each vehicle has different specifications, the specifications of each vehicle (e.g., specifications regarding charge and discharge) may be registered in advance in the server 500.

The charging location of the vehicle 100 shown in FIG. 2 may be the home of the user of the vehicle (e.g., the location where the EVSE unit 300 is installed). In the present embodiment, the location of the vehicle 100 and the SOC of the battery 11 are sent from the vehicle 100 to the server 500 in real time successively while the vehicle 100 is traveling. The latest grid connection state is sent from the vehicle 100 to the server 500 when the vehicle 100 is switched between the plugged-in state and the plugged-out state. The latest state of the vehicle system is sent from the vehicle 100 to the server 500 when the vehicle system is switched between ON and OFF in the vehicle 100. When a destination is set in the NAVI 82, a travel route calculated by the NAVI 82 is sent from the vehicle 100 to the server 500.

The server 200 can acquire the above vehicle information from the server 500. For example, the server 500 sends the vehicle information to the server 200 in response to a request from the server 200. The server 500 may periodically send the vehicle information to the server 200. When power balancing is started (DR start time), the server 200 determines for each vehicle whether the preparation for power balancing has been completed, based on the vehicle information of each vehicle received from the server 500. Hereafter, a vehicle in the vehicle group 1 of which preparation for power balancing has been completed is also called "standby vehicle". When a vehicle meets predetermined requirements (hereinafter also referred to as "standby requirements"), the server 200 determines that the preparation of the vehicle for power balancing has been completed. In the present embodiment, the standby requirements include the following requirements: the vehicle is in the plugged-in state (first standby (SBY) requirement), the SOC of the in-vehicle battery is within a predetermined SOC range (second SBY requirement), and remote control by the server 200 is permitted (third SBY requirement). In order for the standby requirements to be met, all of the first to third SBY requirements need to be met.

Regarding the first SBY requirement, the vehicle 100 goes into the plugged-in state when, for example, the connector 320a of the charging cable 320 connected to the body of the EVSE unit 300 is connected to the inlet 60 of the vehicle 100 (see FIG. 2). The vehicle 100 in the plugged-in state is electrically connected to the power grid PG.

Regarding the second SBY requirement, the predetermined SOC range is set by, for example, the server 200. The predetermined SOC range is set to the range corresponding to the power balancing of the power grid PG requested by DR. For example, the server 200 may lower the upper limit value of the predetermined SOC range in DR that requests an increase in demand (upward DR), and may increase the lower limit value of the predetermined SOC range in DR that requests reverse power flow (downward DR).

Regarding the third SBY requirement, the ECU 150 shown in FIG. 2 (control device of the vehicle 100) permits remote control by the server 200 in a predetermined charge mode (permission mode). As will be described in detail later, the permission mode in the present embodiment includes a first charge mode (hereinafter referred to as "smart charge mode") and a second charge mode (hereinafter referred to as "automatic charge mode"). When the smart charge mode or the automatic charge mode is set in the ECU 150, the server 200 is permitted to perform remote charge control and remote discharge control of the battery 11.

The server 200 selects vehicles for power balancing from the standby vehicles meeting the first to third SBY requirements, and sends a command for remote control (hereinafter referred to as "VPP command") to the selected vehicles. As many vehicles as necessary for power balancing are selected. A VPP command is, for example, a command for remote charge control or remote discharge control. The server 200 causes the batteries of the selected vehicles to charge or discharge by remote control. Power balancing of the power grid PG is thus performed. Hereafter, those vehicles that have performed power balancing according to a VPP command are also referred to as "VPP vehicles." Of the VPP vehicles, those vehicles that have been charged for power balancing are also referred to as "first VPP vehicles," and those vehicles that have been discharged for power balancing are also referred to as "second VPP vehicles."

In the present embodiment, the user (administrator) of each vehicle in the vehicle group 1 can sign a contract with the aggregator in advance, and receive a predetermined incentive when a predetermined requirement is met. For example, when a vehicle performs power balancing according to a VPP command, a second or third incentive requirement that will be described later is met, and an incentive is given by the aggregator to the user of the vehicle.

The server 200 is configured to manage incentives that are given to the administrators who manage the vehicles in the vehicle group 1. Each vehicle in the vehicle group 1 is an electric power device that is electrically connectable to the power grid PG. More specifically, the server 200 manages incentives for the administrators (e.g., vehicle users) for each vehicle by distinguishing them by the vehicle IDs. For example, the power transferred between the power grid PG and an EVSE unit (forward or reverse power flow) may be detected by a predetermined watt-hour meter (e.g., at least one of a smart meter installed at a network connection point and a built-in watt-hour meter of the EVSE unit), and the detected value may be sent to the server 200. The server 200 may determine whether the vehicle has performed power balancing according to a VPP command by using the detected value from the predetermined watt-hour meter.

The server 200 includes a storage unit 210, an update unit 220, and a prediction unit 230. The storage unit 210 is embodied by, for example, a storage device such as hard disk drive or solid state drive (SSD). The update unit 220 and the prediction unit 230 are embodied by, for example, a processor and a program to be executed by the processor. However, the present disclosure is not limited to this, and the update unit 220 and the prediction unit 230 may be embodied by dedicated hardware (electronic circuit).

The storage unit 210 stores data on incentives for the user (administrator) of each vehicle in the vehicle group 1 (hereinafter also referred to as "incentive data"). The update unit 220 updates incentive data stored in the storage unit 210 so that, when a vehicle meets a predetermined requirement, an incentive corresponding to the met requirement is given to the vehicle user. Specifically, when a vehicle meets predetermined first, second, and third incentive requirements, the update unit 220 gives first, second, and third incentives to the vehicle user, respectively, and reflects the results in the incentive data in the storage unit 210.

More specifically, when the vehicle 100 shown in FIG. 2 goes into the plugged-in state (that is, when the inlet 60 is electrically connected to the power grid PG), the first incentive requirement is met, and the first incentive is given to the user of the vehicle 100. In other words, the first incentive is given to a user of a vehicle that meets the first SBY requirement.

When the vehicle 100 in the plugged-in state charges the battery 11 for power balancing of the power grid PG, the second incentive requirement is met, and the second incentive is given to the user of the vehicle 100. In other words, the second incentive is given to a user of a first VPP vehicle.

When the vehicle 100 in the plugged-in state discharges the battery 11 for power balancing of the power grid PG, the third incentive requirement is met, and the third incentive is given to the user of the vehicle 100. In other words, the third incentive is given to a user of a second VPP vehicle.

The update unit 220 may calculate the first to third incentives based on a predetermined incentive unit price. The unit prices of the first to third incentives are determined as desired by a contract.

The prediction unit 230 is configured to perform movement prediction of each vehicle in the vehicle group 1. The prediction unit 230 predicts movement of each vehicle based on, for example, the vehicle information of each vehicle received from the server 500. Hereinafter, predicted future movement of a vehicle is also referred to as "travel plan." Examples of the travel plan include a point of departure, departure time from the point of departure, a destination, arrival time at the destination, and a travel route to the destination.

The prediction unit 230 may estimate that the vehicle has gone into a parked state when the vehicle system is switched from on to off. The prediction unit 230 may estimate that the vehicle is present at the user's home or workplace when the vehicle continues to be in the parked state for a predetermined time or longer. The prediction unit 230 may determine whether a user is in the vehicle based on the location information of the vehicle and the user location information. The prediction unit 230 may predict the user's future action while tracking the location of the user after the user gets out of the vehicle by using the user location information. The prediction unit 230 may predict the user's action schedule from history data on the user's actions (e.g., weather information, traffic jam information, and past location data managed for each day of the week). The prediction unit 230 may predict that the vehicle will start moving after the lapse of a predetermined time when the vehicle system is switched from off to on. The prediction unit 230 may acquire a travel plan from information set in the navigation system. The prediction unit 230 may predict the arrival time of the vehicle at the destination and the remaining capacity of the battery upon arrival at the destination while tracking the location of the vehicle by using the location information of the vehicle. The prediction unit 230 may predict a trip schedule of the vehicle from the trip history data of the vehicle (e.g., weather information, traffic jam information, and past location data managed for each day of the week).

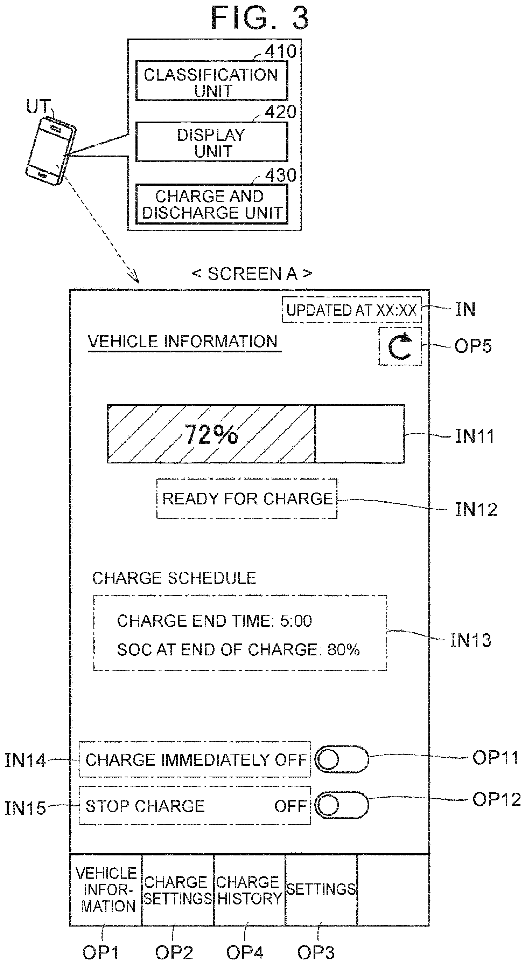

FIG. 3 illustrates the configuration of the mobile terminal UT and a screen A. Referring to FIG. 3 together with FIGS. 1 and 2, the mobile terminal UT includes a classification unit 410, a display unit 420, and a charge and discharge unit 430. The classification unit 410, the display unit 420, and the charge and discharge unit 430 are embodied by, for example, a processor and a program to be executed by the processor. However, the present disclosure is not limited to this, and each unit may be embodied by dedicated hardware (electronic circuit). The mobile terminal UT is an example of the "display device" according to the present disclosure. In the present embodiment, the display unit 420 serves as the "first display unit," the "second display unit," and the "third display unit" according to the present disclosure.

The classification unit 410 is configured to classify incentives earned by the administrator of the vehicle 100 according to situations. The display unit 420 is configured to perform display control of the mobile terminal UT. Specifically, the display unit 420 displays the incentives classified according to situations by the classification unit 410 in such a manner that the incentives for each situation are identifiable. The display unit 420 displays a charge schedule received from the server 200. The display unit 420 acquires information necessary for the display control from at least one of the vehicle 100 and the server 200, as necessary. The charge and discharge unit 430 requests the vehicle 100 to perform charge control or discharge control, as necessary. Each of the display unit 420 and the charge and discharge unit 430 may directly send a request signal to the vehicle 100, or may send a request signal to the vehicle 100 via the server 200 or 500.

Once the mobile app is launched on the mobile terminal UT, the mobile app requests user authentication (login). The user can log in by entering the predetermined authentication information to the mobile terminal UT. The mobile terminal UT can acquire information on the user who has logged in to the mobile app (e.g., incentive data) from the server 200. After login, the mobile terminal UT displays the screen A shown in FIG. 3.

The screen A includes first to fifth operation sections OP1 to OP5 and an information section IN. When the fifth operation section OP5 is operated, the display unit 420 performs a screen update process so that the latest information is displayed on the screen A. The display unit 420 may request the latest information from at least one of the vehicle 100 and the server 200 when the fifth operation section OP5 is operated. The display unit 420 also performs the screen update process when a predetermined amount of time has elapsed since the previous screen update without the fifth operation section OP5 being operated. The information section IN indicates the time (update date and time) the screen was last updated.

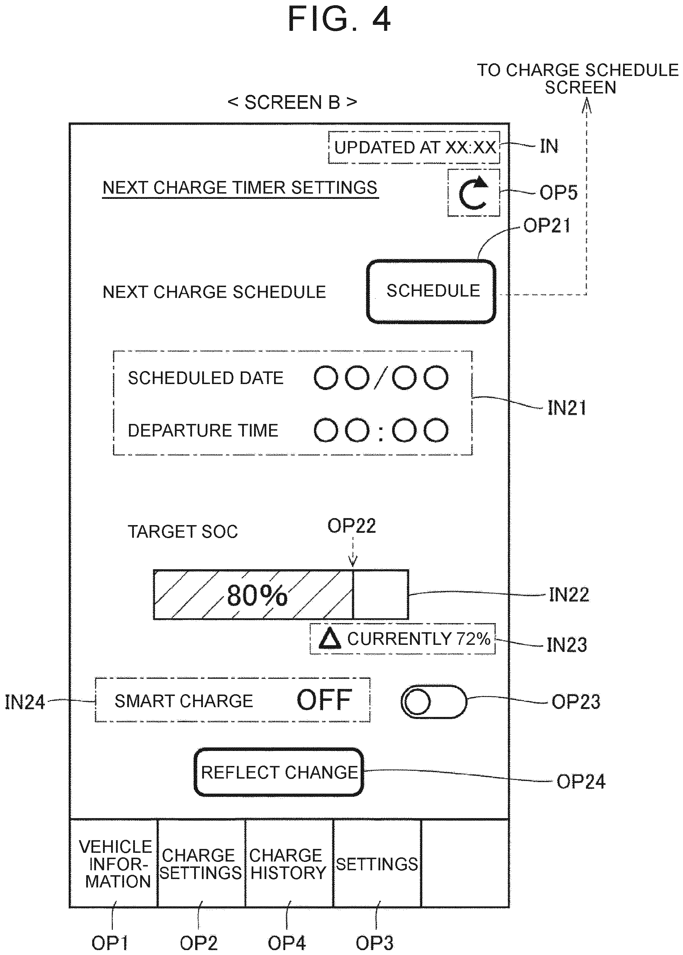

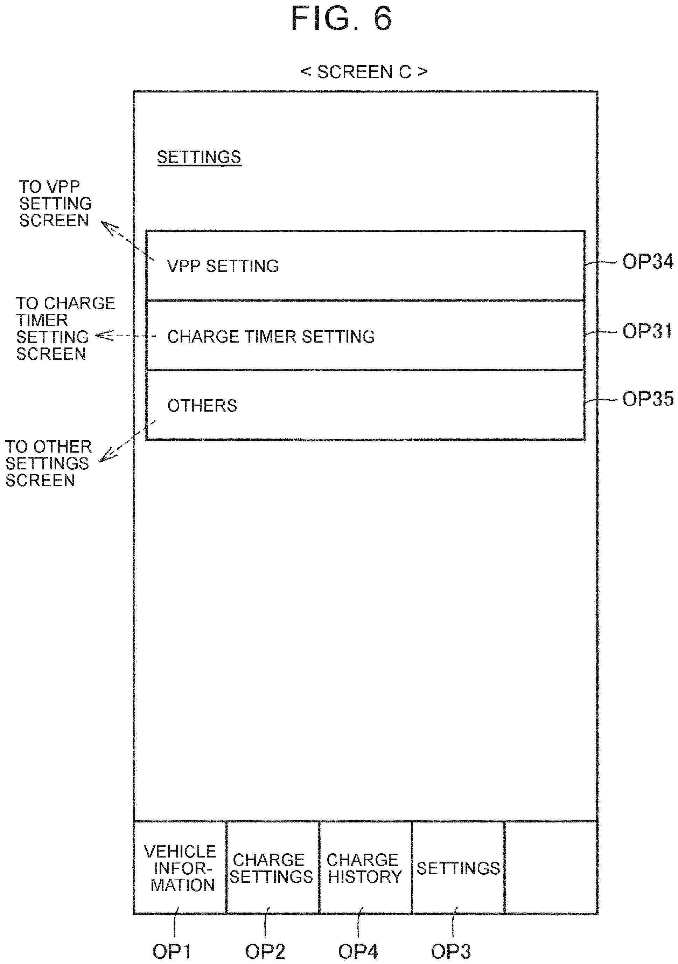

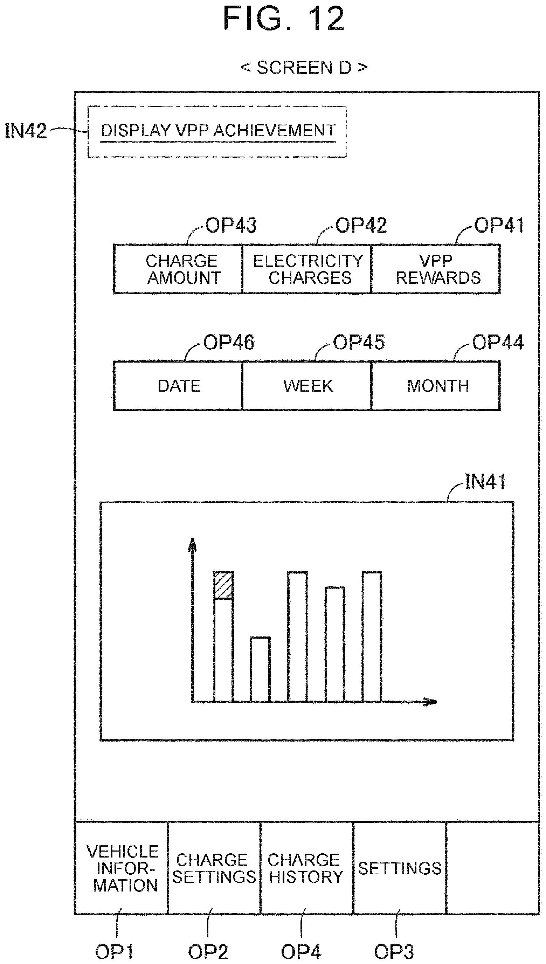

The first to fourth operation sections OP1 to OP4 receive a designation of the screen. The display unit 420 switches the screen according to input from the user, and displays the screen designated by the user. For example, when the second operation section OP2 (charge settings button) is operated on the screen A or on a screen C (FIG. 6) or D (FIG. 12) that will be described later, the display unit 420 displays a screen B shown in FIG. 4 that will be described later on the mobile terminal UT. When the third operation section OP3 (settings button) is operated on any of the screens A, B, and D, the display unit 420 displays the screen C shown in FIG. 6 on the mobile terminal UT. When the fourth operation section OP4 (charge history button) is operated on any of the screens A to C, the display unit 420 displays the screen D shown in FIG. 12 on the mobile terminal UT. When the first operation section OP1 (vehicle information button) is operated on any of the screens B to D, the display unit 420 displays the screen A shown in FIG. 3 on the mobile terminal UT.

The screen A is a screen that displays information on the vehicle 100. The screen A further includes information sections IN11 to IN15 and operation sections OP11, OP12.

The information section IN11 indicates the current SOC of the battery 11 (e.g., a detected value from the monitoring module 11a). The information section IN12 indicates the charge status of the battery 11 (e.g., ready for charge, charging, or charge complete). The information section IN13 shows information on the next charge (e.g., charge end time, and SOC at the end of charge). When the next charge is not set, the display unit 420 may display in the information section IN13 a message that the next charge is not set.

The operation section OP11 receives an instruction to start an external charge. The information section IN14 indicates the operation status (ON/OFF) of the operation section OP11. The operation section OP12 receives an instruction to stop an external charge. The information section IN15 indicates the operation status (ON/OFF) of the operation section OP12. When the user turns on the operation section OP11 (toggle switch), the charge and discharge unit 430 requests the vehicle 100 (ECU 150) to start an external charge, and the ECU 150 starts an external charge of the battery 11 in response to this request. In the present embodiment, a charge of the battery 11 is performed according to the operation performed on the operation section OP 11. When the user turns on the operation section OP12 (toggle switch) during an external charge of the battery 11, the charge and discharge unit 430 requests the vehicle 100 (ECU 150) to end the external charge, and the ECU 150 stops the external charge of the battery 11 in response to this request. When the battery 11 becomes fully charged during an external charge, the ECU 150 also stops the external charge of the battery 11.

Whether the operation sections OP11, OP12 are displayed may be controlled by the display unit 420. The display unit 420 may not display the operation sections OP11, OP12 when the vehicle 100 is not in the plugged-in state. The display unit 420 may not display the operation section OP11 while an external charge is being performed. The display unit 420 may not display the operation section OP12 when an external charge is not being performed. Such display modes can make the user more easily grasp the charge status of the battery 11. Each operation section cannot be operated when hidden. By hiding an operation section, the display unit 420 can prohibit that operation section from being operated.

FIG. 4 illustrates the screen B displayed on the mobile terminal UT. The first to fifth operation sections OP1 to OP5 and the information section IN on the screen B shown in FIG. 4 are the same as those on the screen A (FIG. 3). A screen update process that is performed on the screen B is similar to the above screen update process that is performed on the screen A.

Referring to FIG. 4 together with FIGS. 1 to 3, the screen B is a screen that displays information on the next charging timer settings for the vehicle 100. The screen B further includes information sections IN21 to IN24 and operation sections OP21 to OP24.

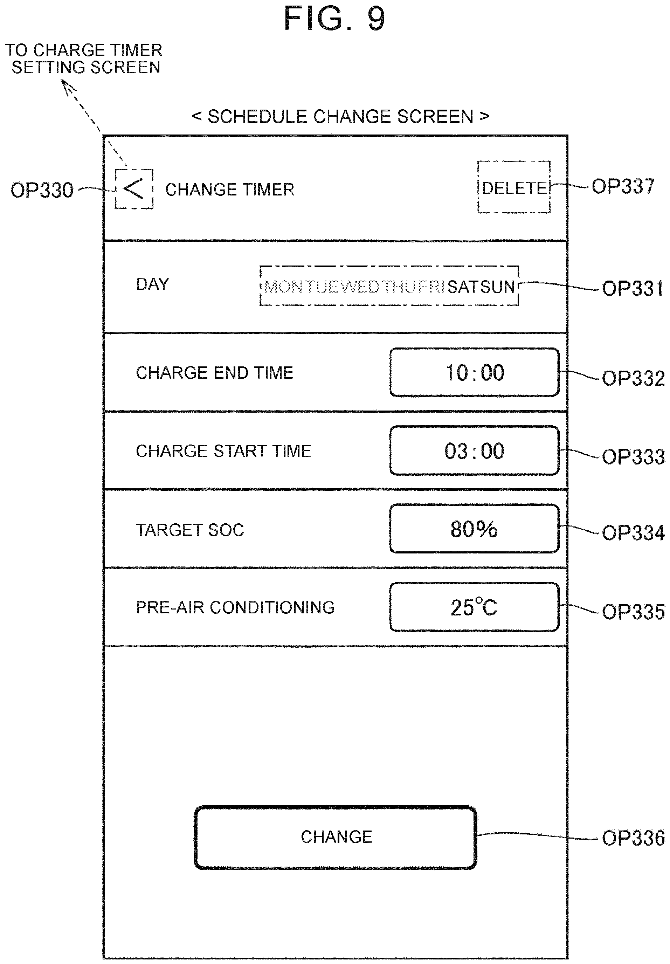

The information section IN21 shows information on the next charge (e.g., scheduled charge date, and scheduled departure time of the vehicle 100). The scheduled departure time may be the same as the charge end time (FIG. 3). The display unit 420 may switch the screen B to a screen for changing the next charge schedule (e.g., the screen shown in FIG. 9 that will be described later) when the user touches the area of the information section IN21 on the screen B (touch panel screen).

The information section IN22 indicates a current target SOC. The target SOC may be the same as the SOC at the end of charge (FIG. 3). The information section IN23 indicates a current SOC of the battery 11. The operation section OP22 receives input of the target SOC. When a target SOC lower than the current SOC of the battery 11 indicated in the information section IN23 is entered through the operation section OP22, the display unit 420 may display a confirm message such as "The target SOC is lower than the current SOC. Are you sure you want to continue?" on the mobile terminal UT.

The operation section OP23 receives an instruction on whether to set the smart charge mode in the vehicle 100 (ECU 150). The information section IN24 indicates the operation status (ON/OFF) of the operation section OP23.

The operation section OP24 receives input indicating confirmation of the changed content. The input to each of the operation sections OP22, OP23 is enabled when the operation section OP24 is operated.

Specifically, the information section IN22 indicates a target SOC by an SOC bar with the lowest value on the left and the highest on the right. The current SOC of the battery 11 is shown by the information section IN23 (indicator) provided for the SOC bar. The user can change the target SOC by sliding the operation section OP22 (slider) to the right or left. The user can reflect the changed target SOC in charge control by operating the operation section OP24 after changing the target SOC. The user can set the smart charge mode in the ECU 150 or cancel the smart charge mode set in the ECU 150 by turning the operation section OP23 (toggle switch) on or off and then operating the operation section OP24. When the operation section OP24 is operated, the charge and discharge unit 430 requests the vehicle 100 (ECU 150) to change the conditions for charge control (more specifically, to change the conditions for charge control to the conditions specified by the operation sections OP22, OP23), and the ECU 150 changes the conditions for charge control of the battery 11 in response to this request.

The display unit 420 may display on the screen B an operation section that receives an instruction on whether to set the automatic charge mode in the vehicle 100 (ECU 150) instead of or in addition to the operation section OP23.

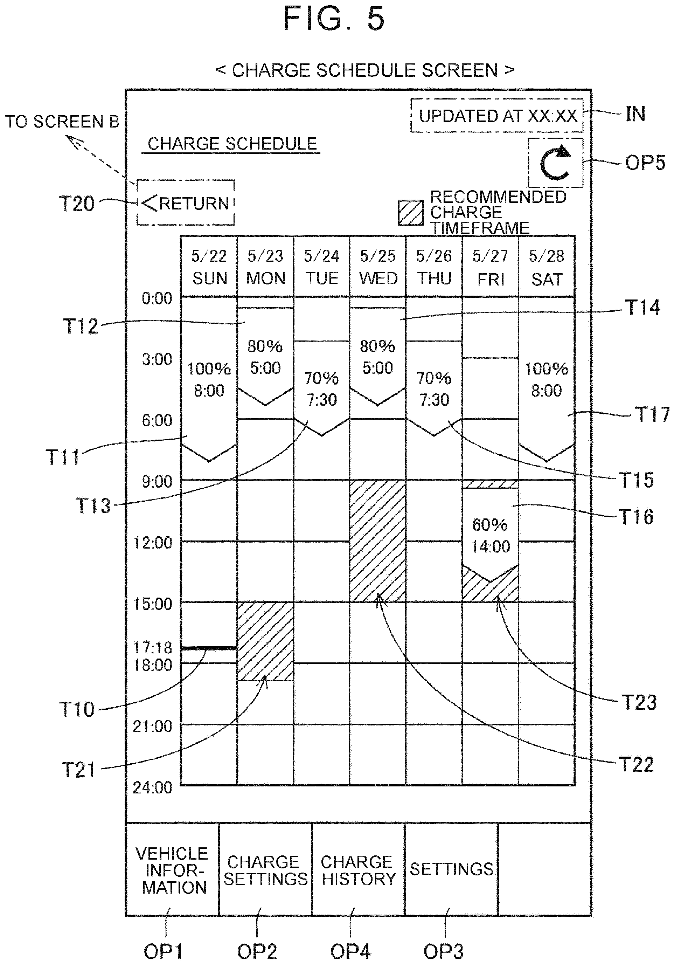

When the operation section OP21 (schedule button) is operated on the screen B, the display unit 420 displays a charge schedule screen shown in FIG. 5 on the mobile terminal UT. FIG. 5 illustrates a charge schedule screen displayed on the mobile terminal UT. The first to fifth operation sections OP1 to OP5 and the information section IN on the charge schedule screen shown in FIG. 5 are the same as those on the screen A (FIG. 3). A screen update process that is performed on the charge schedule screen is similar to the above screen update process that is performed on the screen A.

Referring to FIG. 5 together with FIGS. 1 to 3, the charge schedule screen is a screen that displays a charge schedule of the vehicle 100 for a predetermined period. The predetermined period on the charge schedule screen shown in FIG. 5 is one week from today (from May 22nd to May 28th). However, the predetermined period can be set to any desired period. The predetermined period may be changeable according to a request from the user.

The charge schedule screen includes an information section T10, an operation section T20, charge schedules T11 to T17, and recommended charge timeframes T21 to T23.

The information section T10 indicates current time. Each of the charge schedules T11 to T17 indicates a charge schedule set in the vehicle 100 (ECU 150) (e.g., charge start time, charge end time, and SOC at the end of charge). The ECU 150 basically performs charge control as indicated by the charge schedules T11 to T17. The display unit 420 may switch the charge schedule screen to a screen for changing the charge schedule touched by the user (e.g., the screen shown in FIG. 9 that will be described later) when the user touches the area of any of the charge schedules T11 to T17 on the charge schedule screen (touch panel screen).

Each of the recommended charge timeframes T21 to T23 indicates a recommended charge timeframe received by the mobile terminal UT from the server 200. A recommended charge timeframe is a timeframe in which an incentive is expected to be earned for performing an external charge, and is obtained by the server 200. By displaying recommended charge timeframes, the charge schedule screen encourages the user to put the vehicle 100 into the plugged-in state and perform an external charge within the recommended charge timeframes. The charge schedule T16 is set within the recommended charge timeframe T23 on Friday, May 27th. How to obtain a recommended charge timeframe will be described later.

The operation section T20 receives an instruction to return to the previous screen. When the operation section T20 (back button) is operated by the user, the display unit 420 displays the screen B on the mobile terminal UT.

FIG. 6 illustrates the screen C displayed on the mobile terminal UT. The first to fourth operation sections OP1 to OP4 on the screen C shown in FIG. 6 are the same as those on the screen A (FIG. 3).

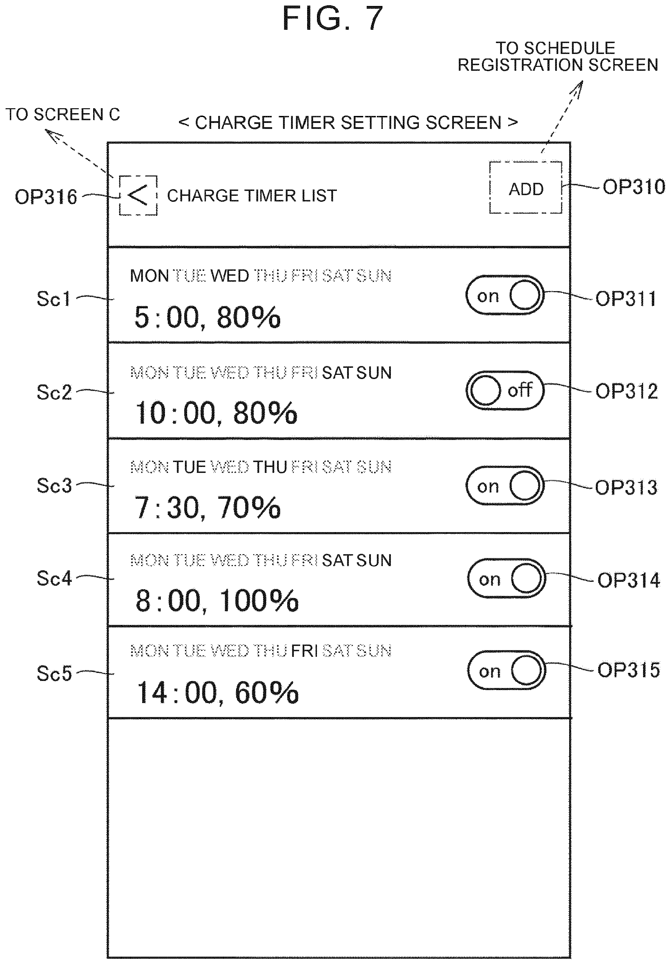

Referring to FIG. 6 together with FIGS. 1 to 3, the screen C is a screen for performing settings on charge and discharge of the battery 11. The screen C further includes operation sections OP31, OP34, and OP35. When the operation section OP31 (charge timer setting button) is operated on the screen C, the display unit 420 displays a charge timer setting screen shown in FIG. 7 on the mobile terminal UT.

FIG. 7 illustrates the charge timer setting screen displayed on the mobile terminal UT. Referring to FIG. 7, the charge timer setting screen displays set charge schedules Sc1 to Sc5. The charge timer setting screen includes an operation section OP310. The operation section OP310 receives addition of a charge schedule. When the operation section OP3 10 (add button) is operated on the charge timer setting screen, the display unit 420 displays a screen for adding a charge schedule (schedule registration screen) on the mobile terminal UT.

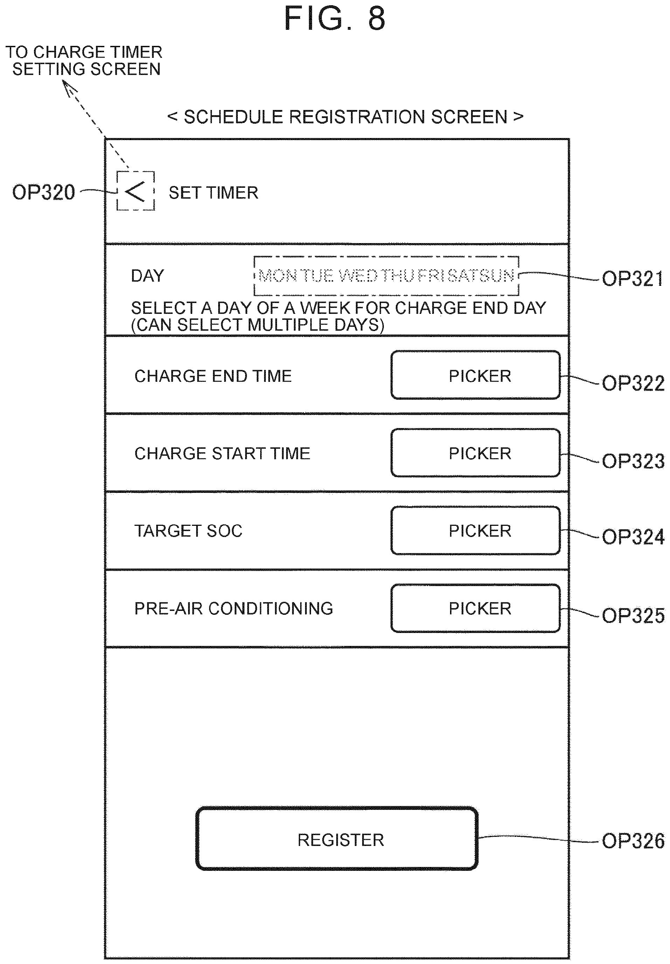

FIG. 8 illustrates the schedule registration screen displayed on the mobile terminal UT. Referring to FIG. 8, the schedule registration screen includes operation sections OP320 to OP325. The operation sections OP321, OP322, OP323, OP324, and OP325 receive input of the day of the week, charge end time, charge start time, target SOC, and pre-air conditioning temperature, respectively. The operation section OP326 receives input indicating that input of a charge schedule has been completed. The user can register in the mobile app a charge schedule for a day of a week specified by the operation section OP321 by entering the day of the week, charge end time, charge start time, target SOC, and pre-air conditioning temperature using the operation sections OP321 to OP325 (pickers) and then operating the operation section OP326 (register button). The charging schedule thus registered includes the charge end time, charge start time, target SOC, and pre-air conditioning temperature specified by the operation sections OP322 to OP325. The user can simultaneously register the same charge schedule for two or more days of the week by selecting two or more days of the week using the operation section OP321. However, the charge schedule need not necessarily include the charge start time and the pre-air conditioning temperature. The charge schedule is established as long as at least the day of the week, charge end time, and target SOC are entered. The registered charge schedule (set charge schedule) is added to the charge timer setting screen shown in FIG. 7.

When the operation section OP326 (register button) or the operation section OP320 (back button) is operated by the user, the display unit 420 displays the charge timer setting screen (FIG. 7) on the mobile terminal UT. When the user touches the area of any of the charge schedules Sc1 to Sc5 on the charge timer setting screen (touch panel screen) shown in FIG. 7, the display unit 420 displays a screen (schedule change screen) for changing or deleting the charge schedule touched by the user (specified charge schedule) on the mobile terminal UT.

FIG. 9 illustrates the schedule change screen displayed on the mobile terminal UT. Referring to FIG. 9, the schedule change screen includes operation sections OP330 to OP337. The operation sections OP331, OP332, OP333, OP334, and OP335 receive input of the day of the week, charge end time, charge start time, target SOC, and pre-air conditioning temperature, respectively. The operation section OP336 receives input indicating that the charge schedule change has been completed. The operation section OP337 receives an instruction to delete the charge schedule. The user can change the charge schedule by changing at least one of the following items of the specified charge schedule using the operation sections OP331 to OP335 (pickers): the day of the week, charge end time, charge start time, target SOC, and pre-air conditioning temperature, and then operating the operation section OP336 (change button). When the operation section OP337 (delete button) is operated, the specified charge schedule is deleted. The changed or deleted content is reflected on the charge timer setting screen shown in FIG. 7.

When the operation section OP336 (change button), the operation section OP337 (delete button), or the operation section OP330 (back button) is operated by the user, the display unit 420 displays the charge timer setting screen (FIG. 7) on the mobile terminal UT.

Referring back to FIG. 7, the charge timer setting screen further includes operation sections OP311 to OP315. The operation sections OP311 to OP315 are provided for the charge schedules Sc1 to Sc5, respectively. Each of the operation sections OP311 to OP315 receives an instruction on whether to enable the corresponding charge schedule. When any of the operation sections OP311 to OP315 (toggle switches) is turned on, the corresponding charge schedule is enabled. The charge and discharge unit 430 requests the vehicle 100 (ECU 150) to perform an external charge of the battery 11 according to the enabled charge schedule. The enabled charge schedule is set in the ECU 150 in response to this request. Switching between enabling and disabling of the charge schedules using the operation sections OP311 to OP315 is reflected on the charge schedule screen shown in FIG. 5. It is prohibited to simultaneously enable charge schedules with overlapping timeframes.

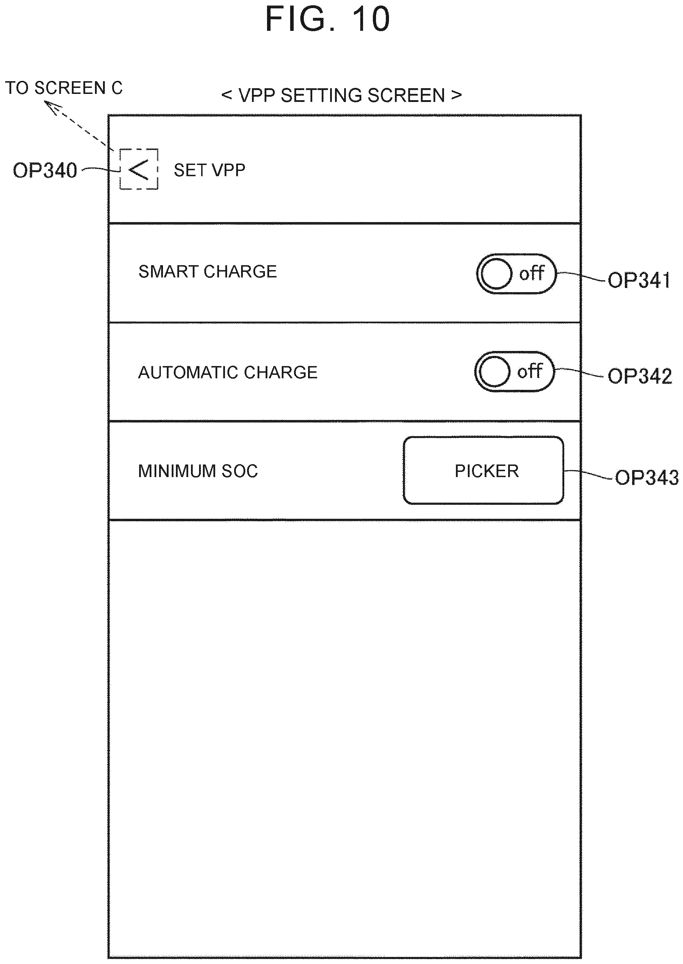

The charge timer setting screen includes an operation section OP316. When the operation section OP316 (back button) is operated by the user, the display unit 420 displays the screen C (FIG. 6) on the mobile terminal UT. When the operation section OP34 (VPP setting button) is operated on the screen C shown in FIG. 6, the display unit 420 displays a VPP setting screen shown in FIG. 10 on the mobile terminal UT.

FIG. 10 illustrates the VPP setting screen displayed on the mobile terminal UT. Referring to FIG. 10, the VPP setting screen is a screen for setting a charge mode and a minimum SOC. The VPP setting screen includes operation sections OP340 to OP343.

The operation section OP341 receives an instruction on whether to set the smart charge mode in the vehicle 100 (ECU 150). The operation section OP342 receives an instruction on whether to set the automatic charge mode in the vehicle 100 (ECU 150). The operation section OP341 and the operation section OP342 cooperate with each other. When the operation section OP341 (toggle switch) is turned on, the operation section OP342 turns off. When the operation section OP342 (toggle switch) is turned on, the operation section OP341 turns off.

One of the three kinds of charge modes is set in the vehicle 100 (ECU 150) by the operation sections OP341, OP342. Specifically, when the operation section OP341 is turned on, the smart charge mode is set in the ECU 150. When the operation section OP342 is turned on, the automatic charge mode is set in the ECU 150. When both operation sections OP341, OP342 are off, a third charge mode (hereinafter referred to as "normal charge mode") is set in the ECU 150. However, when none of the charge schedules set in the mobile terminal UT are enabled, an operation of switching to the smart charge mode (e.g., an operation of turning on the operation section OP341) is prohibited.

The mobile terminal UT sends the charge mode set by the operation sections OP341, OP342 along with the enabled charge schedule (see FIG. 7) to the vehicle 100 and the server 200. The vehicle 100 sets the charge mode received from the mobile terminal UT in the ECU 150. The ECU 150 performs charge and discharge control of the battery 11 according to the set charge mode. In each of the smart charge mode and the automatic charge mode, the ECU 150 permits remote control of the battery 11 (e.g., remote charge control and remote discharge control according to a VPP command) by the server 200. On the other hand, in the normal charge mode, the ECU 150 does not permit remote control of the battery 11 by the server 200.

In any of the above three kinds of charging modes, the server 200 obtains a recommended charge timeframe(s) by using at least one of the following: the supply and demand situation of the power grid PG, price on the electricity market, and weather information (including weather forecast information). The server 200 predicts a timeframe(s) in which an incentive for performing an external charge can be earned (e.g., a timeframe in which DR is very likely to occur), and uses the predicted timeframe as a recommended charge timeframe. The server 200 determines a recommended charge timeframe(s) for each day. When the length of time in a day in which an incentive is expected to be earned is more than a predetermined amount of time, the server 200 may exclude a timeframe in which an incentive unit price is lower than a reference value from the recommended charge timeframe. The server 200 successively determines a recommended charge timeframe(s) according to the constantly changing situation, and successively sends the determined recommended charge timeframe to the mobile terminal UT. The mobile terminal UT reflects the received recommended charge timeframe on the charge schedule screen shown in FIG. 5.

When the normal charge mode is set in the ECU 150, the enabled charge schedule received from the mobile terminal UT is set in the ECU 150. However, when there is no enabled charge schedule (see FIG. 7), no charge schedule is set in the ECU 150. When the normal charge mode is set in the ECU 150 and no charge schedule is set in the ECU 150, the ECU 150 performs an immediate charge. An immediate charge is an external charge that is started as soon as the vehicle 100 goes into the plugged-in state.

When the normal charge mode is set in the ECU 150 and a charge schedule is set in the ECU 150, this charge schedule is a charge schedule for the normal charge mode. The ECU 150 performs an external charge of the battery 11 according to the charge schedule (charge end time and target SOC) in the normal charge mode. Specifically, the ECU 150 performs charging control of the battery 11 so that the SOC of the battery 11 will be equal to or greater than the target SOC at the charge end time. When a charge schedule is set in the ECU 150, an immediate charge will not be performed. However, the user can perform a charge of the battery 11 by operating the operation section OP11 (FIG. 3).

Hereinafter, the requirements required by the charge end time and target SOC indicated by a charge schedule are also referred to as "target SOC requirements." When the charge schedule for the normal charge mode includes charge start time, the ECU 150 performs charge control of the battery 11 so that an external charge of the battery 11 is started at the charge start time. When the charge schedule for the normal charge mode includes a pre-air conditioning temperature, the ECU 150 controls the air conditioner 83 so that the temperature inside the cabin of the vehicle 100 will be the pre-air conditioning temperature at the charge end time. However, the ECU 150 gives priority to the target SOC requirements over the requirements required by the charge start time and pre-air conditioning temperature in the charge schedule for the normal charge mode. The ECU 150 may start an external charge earlier than the charge start time indicated by the charge schedule in order to meet the target SOC requirements. The ECU 150 may reduce power consumption by the air conditioner 83 in order to meet the target SOC requirements.

When the charge mode of the vehicle 100 is the smart charge mode or the automatic charge mode, the server 200 successively determines a charge schedule and discharge schedule of the vehicle 100 according to the situation changing moment by moment, and successively sends the determined charge schedule and discharge schedule to the mobile terminal UT and the vehicle 100. The vehicle 100 uses the received charge schedule as a charge schedule for the corresponding charge mode. The ECU 150 performs charge and discharge control of the battery 11 according to the charge schedule and discharge schedule received from the server 200. The mobile terminal UT reflects the charge schedule received from the server 200 on the charge schedule screen shown in FIG. 5. That is, the charge schedule determined by the server 200 is displayed on the charge schedule screen by the display unit 420.

For the automatic charge mode, the server 200 determines a charge schedule by using the results of movement prediction of the vehicle 100 described above. For the smart charge mode, the server 200 determines a charge schedule without using the results of movement prediction of the vehicle 100. The prediction unit 230 of the server 200 may predict movement of the vehicle 100 by using a learned model obtained by machine learning using artificial intelligence (AI). An operation of switching to the automatic charge mode (e.g., an operation of turning on the operation section OP342 shown in FIG. 10) may be prohibited until learning is completed. When learning for movement prediction is completed, the display unit 420 may display a general explanation of the automatic charge mode as a pop-up on the mobile terminal UT.

The server 200 determines a charge schedule for the smart charge mode using the enabled charge schedule received from the mobile terminal UT. Specifically, the server 200 determines a charge schedule so that the charge schedule meets the target SOC requirements of the enabled charge schedule and maximizes the financial benefits of the vehicle user (e.g., total benefits of electricity charges and incentives). When an enabled charge schedule is changed on the mobile terminal UT, the server 200 updates the charge schedule for the smart charge mode based on the changed schedule received from the mobile terminal UT. The server 200 determines a discharge schedule for a timeframe other than the timeframe of the charge schedule, as necessary.

The server 200 determines a charge schedule for the automatic charge mode by using the results of movement prediction of the vehicle 100 by the prediction unit 230 described above. Specifically, the server 200 predicts a timeframe in which the vehicle 100 will be in the plugged-in state by using the results of movement prediction of the vehicle 100, and determines a charge schedule so that the charge schedule includes charge start time and charge end time in the predicted timeframe and maximizes the financial benefits of the vehicle user. The server 200 determines a discharge schedule at a timeframe other than the timeframe of the charge schedule, as necessary.

For each of the smart charge mode and the automatic charge mode, the server 200 determines charge and discharge schedules for giving an incentive to the vehicle user. Specifically, the server 200 determines a charge schedule for giving an incentive to the vehicle user for performing an external charge in a timeframe in which upward DR is predicted to occur and the vehicle 100 is very likely to meet the standby requirements described above. The server 200 also determines a discharge schedule for giving an incentive to the vehicle user for performing external power supply in a timeframe in which downward DR is predicted to occur and the vehicle 100 is very likely to meet the standby requirements.

On the VPP setting screen shown in FIG. 10, the operation section OP343 receives input of a minimum SOC. When a minimum SOC is input via the operation section OP343 (picker), the charge and discharge unit 430 requests the vehicle 100 (ECU 150) to perform charge and discharge control according to the input minimum SOC, and the ECU 150 changes the conditions for charge and discharge control of the battery 11 in response to this request. The ECU 150 having received this request performs charge and discharge control (more specifically, control for external charge and external power supply) of the battery 11 so that the SOC of the battery 11 does not fall below the minimum SOC. When the vehicle 100 goes into the plugged-in state with the SOC of the battery 11 being less than the minimum SOC, the ECU 150 immediately starts an external charge of the battery 11, and ends the external charge when the SOC of the battery 11 reaches the minimum SOC.

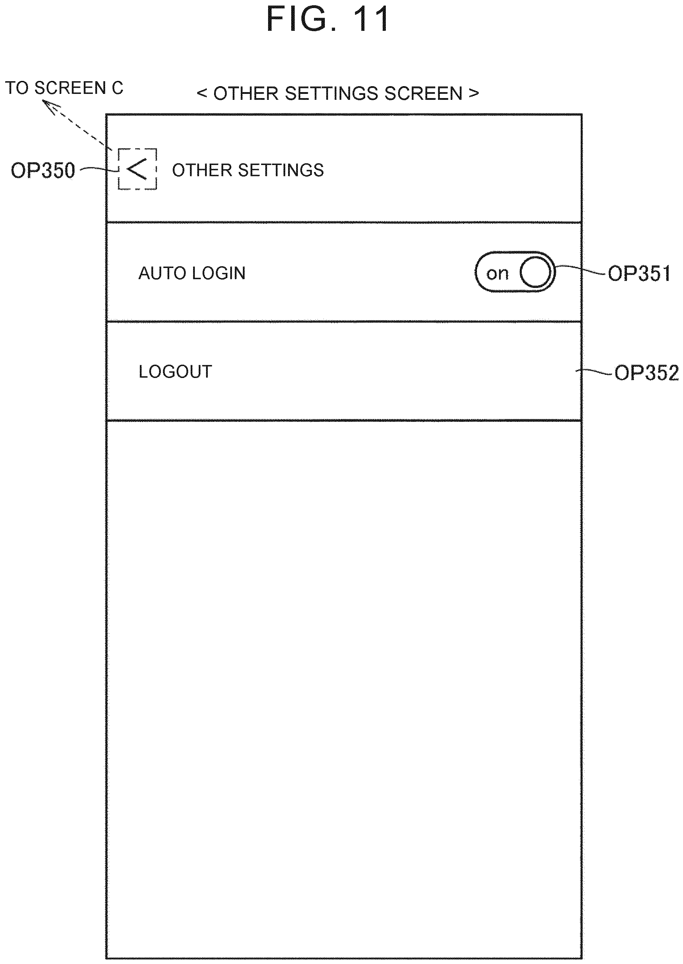

When the operation section OP340 (back button) is operated on the VPP setting screen by the user, the display unit 420 displays the screen C (FIG. 6) on the mobile terminal UT. When the operation section OP35 (other settings button) is operated on the screen C shown in FIG. 6, the display unit 420 displays an other settings screen shown in FIG. 11 on the mobile terminal UT.

FIG. 11 illustrates the other settings screen displayed on the mobile terminal UT. Referring to FIG. 11, the other settings screen is a screen for performing settings for the mobile app. The other settings screen includes operation sections OP350 to OP352.

The operation section OP351 receives an instruction on whether to enable automatic login (automatic sign-in). When the operation section OP351 (toggle switch) is turned on, automatic login is enabled, and user authentication will be omitted the next time the mobile app is launched. The operation section OP352 receives an instruction to log out (sign out) of the mobile app. When the operation section OP352 (logout button) is operated, the mobile app is logged out. With the mobile app logged out, the mobile terminal UT cannot acquire user information and vehicle information from the server 200.

When the operation section OP350 (back button) is operated on the other settings screen by the user, the display unit 420 displays the screen C (FIG. 6) on the mobile terminal UT.

FIG. 12 illustrates the screen D displayed on the mobile terminal UT. The first to fourth operation sections OP1 to OP4 on the screen D are the same as those on the screen A (FIG. 3).

Referring to FIG. 12, the screen D is a screen that displays data on charge and discharge (external charge and external power supply) of the battery 11. The screen D includes information sections IN41, IN42 and operation sections OP41 to OP46. The display unit 420 displays data specified by the operation sections OP41 to OP46 by a bar graph in the information section IN41. The display unit 420 also displays in the information section IN42 the kind of data displayed in the information section IN41.

The operation sections OP41 to OP43 receive input of the kind of data to be displayed in the information section IN41. When the operation section OP41 is operated, a VPP achievement (i.e., incentives earned by the administrator of the vehicle 100) is displayed in the information section IN41. When the operation section OP42 is operated, electricity charges (e.g. yen, dollar, euro, renminbi) are displayed in the information section IN41. When the operation section OP43 is operated, the charge amount (kWh) is displayed in the information section IN41. The vertical axis of the graph displayed in the information section IN41 changes depending on which of the operation sections OP41 to OP43 is operated.

The operation sections OP44 to OP46 receive input of the data period to be displayed in the information section IN41. When the operation section OP44 is operated, data for the most recent one-month period is displayed in the information section IN41. When the operation section OP45 is operated, data for the most recent one-week period is displayed in the information section IN41. When the operation section OP46 is operated, data for the previous day is displayed in the information section IN41. The horizontal axis of the graph displayed in the information section IN41 changes depending on which of the operation sections OP44 to OP46 is operated.

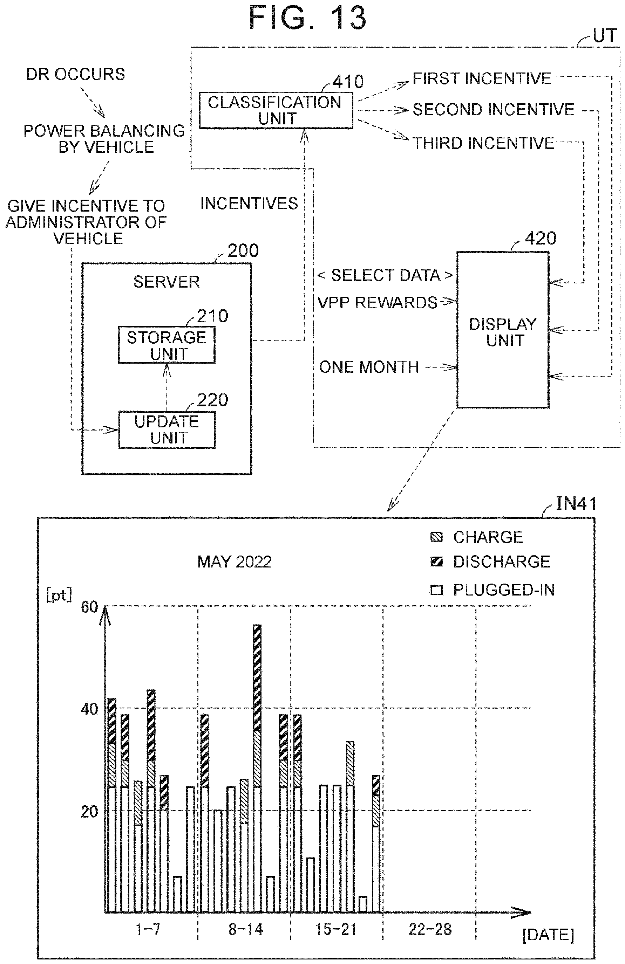

FIG. 13 shows a graph that is displayed in the information section IN41 when the operation sections OP41, OP44 are operated. Referring to FIG. 13, the information section IN41 shows, for each predetermined period, the incentives earned by the administrator of the vehicle 100 in the most recent one-month period.

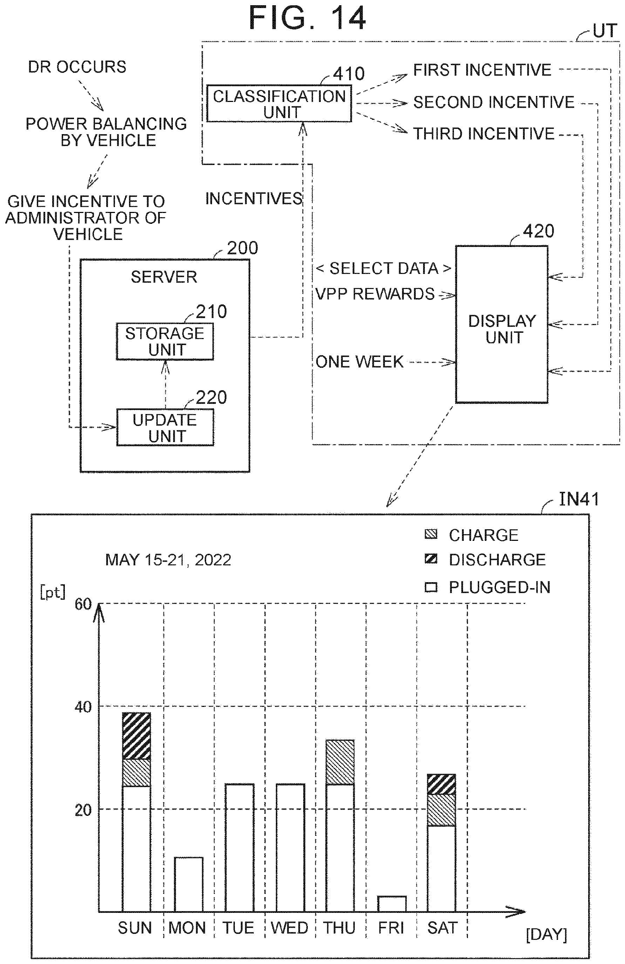

FIG. 14 shows a graph that is displayed in the information section IN41 when the operation sections OP41, OP45 are operated. Referring to FIG. 14, the information section IN41 shows, for each day of the week, the incentives earned by the administrator of the vehicle 100 in the most recent one-week period.

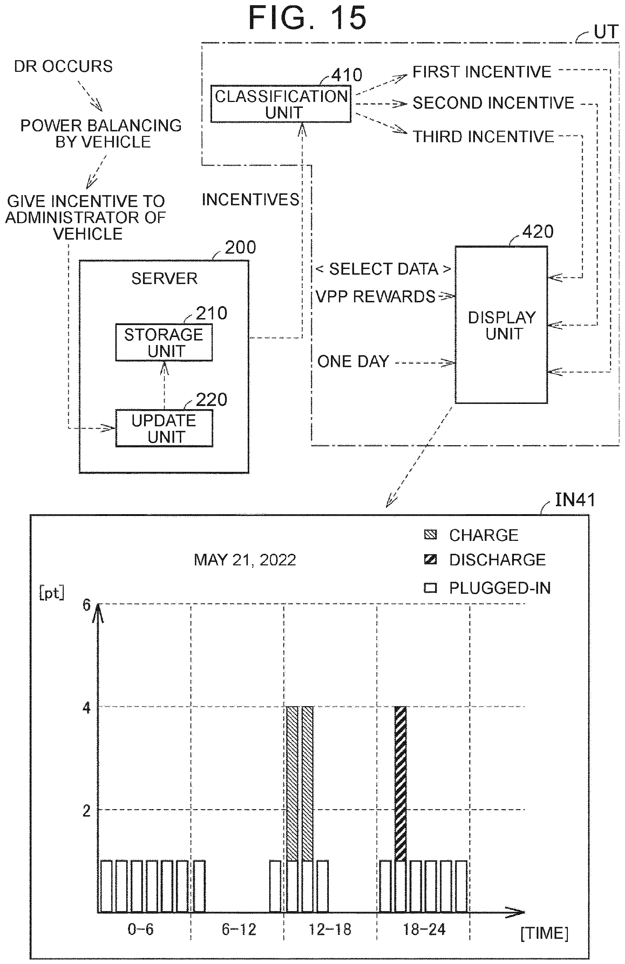

FIG. 15 shows a graph that is displayed in the information section IN41 when the operation sections OP41, OP46 are operated. Referring to FIG. 15, the information section IN41 shows, for each predetermined timeframe, the incentives earned by the administrator of the vehicle 100 in the previous day.

The mobile terminal UT receives incentive data of the vehicle user (i.e., information showing the incentives earned by the vehicle user) from the server 200. The first to third incentives described above are used in the present embodiment. These incentives occur in different situations. For example, every time an incentive to be given to the vehicle user occurs, the server 200 sends the amount of the incentive along with incentive identification information to the mobile terminal UT. The incentive identification information indicates that the incentive that has occurred is the first incentive, the second incentive, or the third incentive. The incentive identification information may include the kind of DR and the incentive rate. In the mobile terminal UT, the classification unit 410 classifies the incentives earned by the administrator of the vehicle 100 according to situations. The classification unit 410 classifies all the incentives earned by the administrator of the vehicle 100 into the first incentive (plugged-in), the second incentive (charge), and the third incentive (discharge) by using identification information of each incentive (incentive identification information). The display unit 420 displays the incentives classified according to situations by the classification unit 410 (first to third incentives) in the information section IN41 in such a manner that the kinds of incentives can be identified (see FIGS. 13 to 15).

In the bar graphs shown in FIGS. 13 to 15, the incentives for each situation are made identifiable by showing each kind of incentive in a different pattern. However, any display method may be used to allow the user to identify the kinds of incentives. For example, each kind of incentive may be shown in a different color. The kind of incentive may be shown by at least one of letter and symbol.

The display form of the incentives is not limited to a bar graph, and can be changed as appropriate. For example, the data may be displayed by a line graph. In a line graph, the incentives for each situation may be made identifiable by showing each kind of incentive by a different line style. The kind of graph may be changeable. The display unit 420 may display data in the information section IN41 by the type of graph specified by the user. The incentives may be displayed in the form of a table rather than in the form of a graph.

In the present embodiment, the incentives for the different situations are displayed on the same screen in such a manner that they are distinguishable from each other (see FIG. 13 to FIG. 15). However, the present disclosure is not limited to this, and the incentives for the different situations may be displayed on separate screens. In such a form, the display unit 420 may switch between or among the screens to display the incentives selected by the user (e.g., one of the first to third incentives).

Each of the first to third incentives may be real currency or virtual currency. Incentives may be points that can be redeemed for goods or services at predetermined stores. In the graphs shown in FIGS. 13 to 15, the incentives earned by the vehicle user are expressed in points (pt). However, the present disclosure is not limited to this, and incentives may be expressed in monetary value (e.g. yen, dollar, euro, renminbi).

Each of the first to third incentives is calculated by the update unit 220 of the server 200. Each incentive can be calculated by any method. The unit price of the first incentive may be the unit price (e.g., yen per hour, dollar per hour, euro per hour, renminbi per hour) for the time during which the vehicle 100 continued to be in the plugged-in state. The update unit 220 may calculate the first incentive by multiplying the total time during which the vehicle 100 continued to be in the plugged-in state and the incentive unit price. The unit prices of the second and third incentives may be the unit price for the number of times power balancing was performed, the unit price for the balanced amount of power (kWh), or the unit price for the time during which power balancing was performed. The update unit 220 may calculate the second and third incentives by multiplying the number of times the vehicle user performed power balancing, the total balanced amount of power, or the total time during which the vehicle user performed power balancing and the incentive unit price. The unit price of each incentive may be fixed or may be variable depending on the situation. The server 200 may determine the unit price of each incentive based on the price on the electricity market. A different incentive unit price may be set for each user according to the specifications of the electric power device possessed by the user.

The VPP achievement (VPP rewards) is shown in FIGS. 13 to 15. However, when the operation section OP42 or OP43 is operated on the screen D shown in FIG. 12, the electricity charges (e.g. yen, dollar, euro, renminbi) or the charge amount (kWh) is displayed, respectively, in modes similar to the display modes shown in FIGS. 13 to 15.

As described above, the incentive display method according to the present embodiment includes first and second steps that will be described below (see FIGS. 13 to 15). In the first step, the server 200 (management device) sends incentives earned by the administrator who manages the vehicle 100 (electric power device) that is available for power balancing to the mobile terminal UT (display device). In the second step, the mobile terminal UT (display device) displays the incentives received from the server 200 to the administrator of the vehicle 100 in such a manner that the incentives are identifiable for each situation.

With the incentives being displayed in this manner, the consumer (administrator of the vehicle 100) can more easily grasp the achievement of the incentives for each situation. The consumer can also consider how he or she can change his or her actions to earn more incentives for each situation without affecting his or her life too much. The incentive display method according to the above embodiment can encourage the consumer (administrator of the vehicle 100) to change his or her actions to respond to a power balancing request.

In the above embodiment, a charge schedule is established by specifying the day of the week, charge end time, and target SOC. However, the present disclosure is not limited to this, and the essential requirements for a charge schedule can be changed as appropriate. For example, a charge schedule for a specific date may be established by specifying the date, charge start time, and charge end time. In the above embodiment, the server 200 determines a charge schedule for each of the smart charge mode and the automatic charge mode so as to increase the financial benefits of the administrator of the vehicle 100. However, the method for determining a charge schedule for each charge mode can be changed as appropriate. For example, a charge schedule may be determined so that consumption of surplus power from self-generation is prioritized over financial benefits. Since some users prefer to consume electricity themselves rather than to sell electricity, a charge schedule may be determined according to the user's preference. A charge schedule may be determined from the perspective of environmental preservation. The server 200 may receive a request regarding a charge schedule from the terminal of the customer (vehicle user) and determine a charge schedule by taking the request into consideration.

The mobile terminal UT may be configured to display not only a charge schedule but also a discharge schedule in a mode similar to the display mode shown in FIG. 5. The mobile terminal UT may be configured to display not only the charge amount (kWh) but also the discharge amount (kWh) in modes similar to the display modes shown in FIGS. 12 to 15.

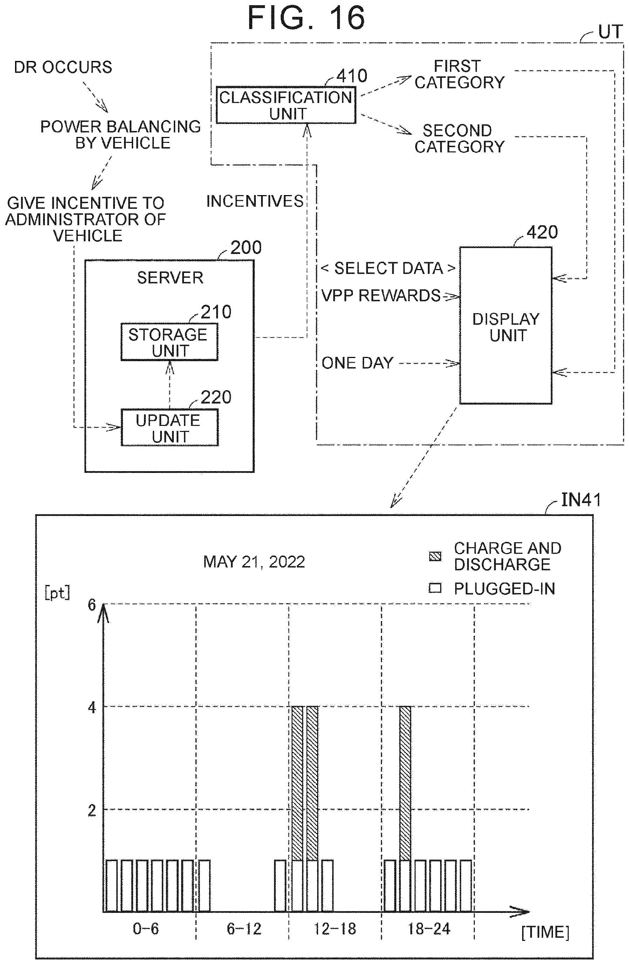

The second incentive and the third incentive need not necessarily be displayed on the mobile terminal UT in such a manner that they are identifiable. FIG. 16 shows a first modification of the incentive display mode shown in FIG. 15. Referring to FIG. 16, the classification unit 410 according to this modification classifies the first incentive as a first category (plugged-in). The classification unit 410 according to this modification does not classify the second incentive and the third incentive as different categories but classifies both the second incentive and the third incentive as a second category (charge and discharge). The display unit 420 displays incentives belonging to the first category (first incentive) and incentives belonging to the second category (total of the second and third incentives) on the mobile terminal UT in such a manner that the incentives in the first and second categories are identifiable.

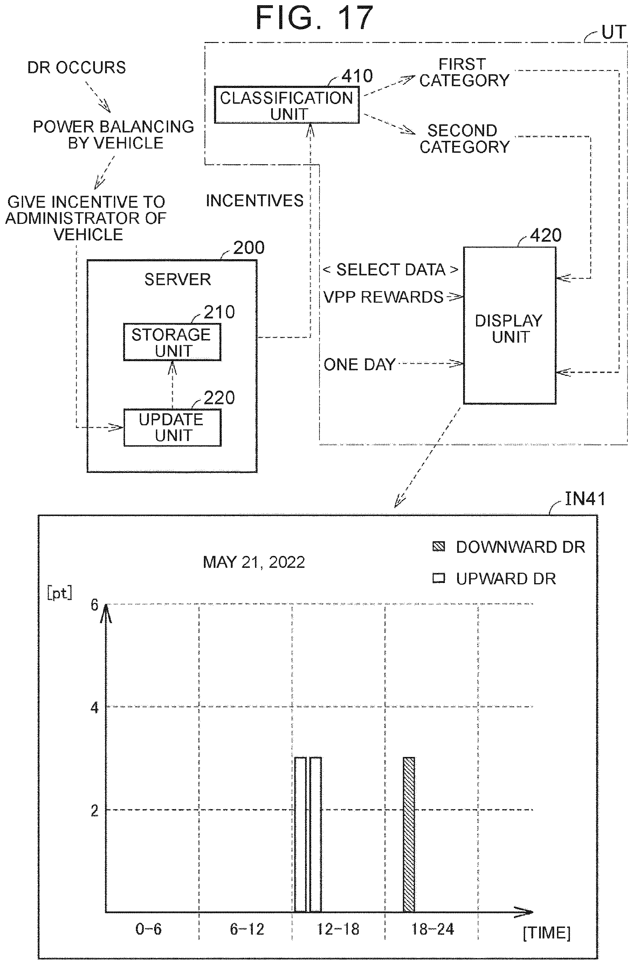

FIG. 17 shows a second modification of the incentive display mode shown in FIG. 15. Referring to FIG. 17, the classification unit 410 according to this modification classifies incentives by the kind of DR. For example, the classification unit 410 classifies incentives earned through participation in upward DR as a first category, and classifies incentives earned through participation in downward DR as a second category. The display unit 420 displays incentives belonging to each category on the mobile terminal UT in such a manner that the incentives of each category are identifiable.

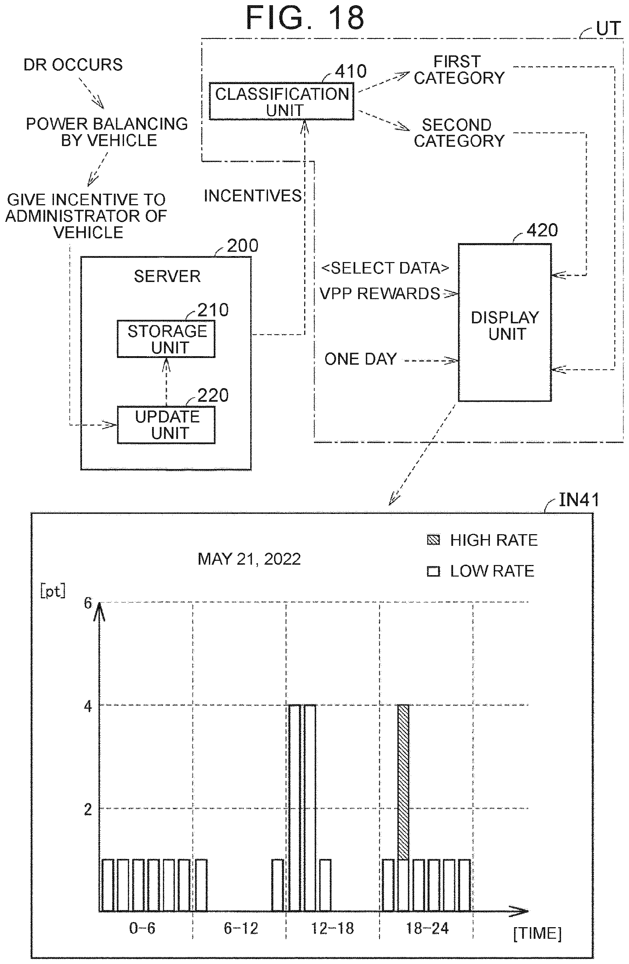

FIG. 18 shows a third modification of the incentive display mode shown in FIG. 15. Referring to FIG. 18, the classification unit 410 according to this modification classifies incentives by the incentive rate (unit price). For example, the classification unit 410 classifies low rate (first rate) incentives as a first category, and high rate (second rate higher than the first rate) incentives as a second category. The display unit 420 displays incentives belonging to each category on the mobile terminal UT in such a manner that the incentives of each category are identifiable.

In the modifications shown in FIGS. 16 to 18, the incentives belonging to the first category are an example of the first situation incentive earned in the first situation, and the incentives belonging to the second category are an example of the second situation incentive earned in the second situation. In the first modification shown in FIG. 16, the incentives belonging to the first category are incentives earned in a situation where the electric power device did not perform power balancing, and the incentives belonging to the second category are incentives earned in a situation where the electric power device performed power balancing. In the second modification shown in FIG. 17, the incentives belonging to the first category are incentives earned in a situation where the administrator was requested to charge the vehicle 100 (electric power device) (upward DR), and the incentives belonging to the second category are incentives earned in a situation where the administrator was requested to discharge the vehicle 100 (electric power device) (downward DR). In the third modification shown in FIG. 18, the incentives belonging to the first category are incentives earned in a situation where an incentive is given to the administrator (vehicle user) at a first rate, and the incentives belonging to the second category are incentives earned in a situation where an incentive is given to the administrator (vehicle user) at a second rate higher than the first rate.

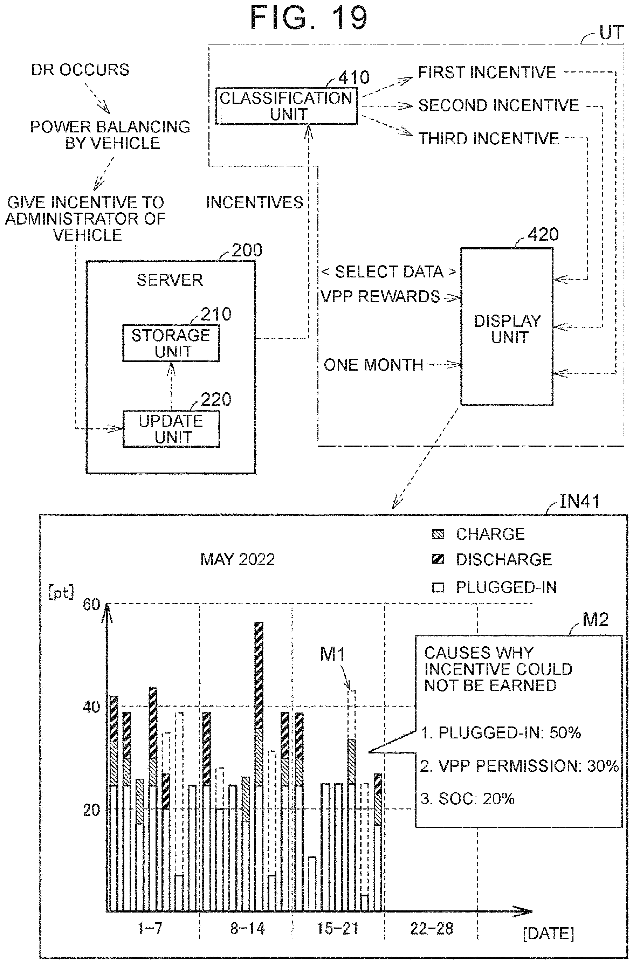

The display unit 420 of the mobile terminal UT may be configured to display an estimated maximum incentive that could have been earned by the vehicle user (administrator of the electric power device) and cause why the incentive earned by the vehicle user did not reach the maximum incentive. Hereinafter, the display unit 420 with such a configuration will be described with reference to FIG. 19. The display unit 420 according to a modification described below serves as the fourth display unit.

FIG. 19 shows a modification of the incentive display mode shown in FIG. 13. Referring to FIG. 19, the display unit 420 according to this modification estimates a maximum incentive that could have been earned by the vehicle user by using, for example, the information on the vehicle 100 received from the server 200, and displays the estimated maximum incentive in the information section IN41 (see, e.g., dashed line M1 in FIG. 19). The maximum incentive is equivalent to the total value of all incentives that could have been earned if the vehicle 100 had met the standby requirements. Hereafter, the difference between the estimated maximum incentive and the incentive earned by the vehicle user is also referred to as "incentive loss." The incentive loss in this modification is equivalent to the incentive that could not be earned because the vehicle 100 did not meet the standby requirements even though the vehicle 100 was located at a charging location.

The display unit 420 displays causes why the incentive earned by the vehicle user did not reach the maximum incentive (hereinafter also referred to as "causes of loss") in the information section IN41 (see, e.g., a message M2 in FIG. 19). Specifically, the display unit 420 displays that which of the first to third SBY requirements was not satisfied and thus the incentive could not be earned. In the example shown in FIG. 19, the display unit 420 displays the causes of loss in descending order of incentive loss in a ranking format. As shown by the message M2, 50% of the incentive loss is due to the first SBY requirement (plugged-in) not having been met, 30% of the incentive loss is due to the third SBY requirement (VPP permission) not having been met, and 20% of the incentive loss is due to the second SBY requirement (SOC) not having been met.

The display unit 420 may cause the mobile terminal UT to perform a notification process according to the cause of the loss. For example, the display unit 420 may identify the main cause of loss of the vehicle 100 by using the information on the vehicle 100 received from the server 200. The display unit 420 may cause the mobile terminal UT to perform a notification process of prompting to plug in the vehicle 100 when the vehicle 100 of which main cause of loss has been identified as due to the first SBY requirement not having been met arrives at a charging location. The display unit 420 may cause the mobile terminal UT to perform a notification process of prompting to adjust the SOC when the vehicle 100 of which main cause of loss has been identified as due to the second SBY requirement not having been met arrives at a charging location. The user can adjust the SOC of the battery 11 by operating the operation section OP11 on the screen A shown in FIG. 3. The user may adjust the SOC of the battery 11 by consuming the power of the battery 11. In a form in which the vehicle 100 has a vehicle-to-home (V2H) function, the power of the battery 11 may be consumed by V2H. The display unit 420 may cause the mobile terminal UT to perform a notification process of prompting to check the charge mode when the vehicle 100 of which main cause of loss has been identified as due to the third SBY requirement not having been met arrives at a charging location. The user can set the charge mode of the vehicle 100 to the smart charge mode or the automatic charge mode by operating the operation section OP341 or OP342 on the VPP setting screen shown in FIG. 10. Each of the above notification processes may be performed by at least voice or popup display.

With the display unit 420 according to the above modification, the consumer (administrator of the vehicle 100) can more easily grasp the causes why he or she failed to earn the incentive (causes of loss). This facilitates the consumer to change his or her actions so that he or she can earn incentives that he or she failed to earn.

The mobile terminal UT may be configured so that the incentive classification method and the incentive display mode can be switched. The incentive classification method and the incentive display mode may be switched in response to a request from the user. For example, the mobile terminal UT may switch between the display mode shown in FIG. 15 and the display mode shown in FIG. 16 in response to a request from the user. The mobile terminal UT may switch among the plurality of kinds of display modes shown in FIGS. 16 to 18 in response to a request from the user. The mobile terminal UT may switch between the display mode shown in FIG. 13 and the display mode shown in FIG. 19 in response to a request from the user.

The mobile terminal UT may be configured so that the user can participate in or withdraw from DR part way through by operating the operation section OP11 or OP 12 (FIG. 3) on the screen A. In this form, the display unit 420 of the mobile terminal UT may display the unit price of the incentive that can be earned by operating the operation section OP11 or OP12 (FIG. 3) (that is, the unit price of the incentive that can be earned by participating in DR part way through) on the screen A (e.g., near the operation section OP11 or OP12). The display unit 420 of the mobile terminal UT may also display the unit price of the incentive that will be lost by operating the operation section OP11 or OP12 (FIG. 3) (that is, the unit price of the incentive that will be lost by withdrawing from DR part way through) on the screen A (e.g., near the operation section OP 11 or OP 12). However, the present disclosure is not limited to this, and an operation of the operation sections OP11, OP12 may be prohibited during participation in DR.

In the above embodiment, the first incentive requirement is met when the vehicle 100 goes into the plugged-in state. However, the present disclosure is not limited to this, and the first incentive requirement may be met when the vehicle 100 goes into the plugged-in state and the vehicle 100 is set to either the smart charge mode or the automatic charge mode. Alternatively, the first incentive requirement may be met when the vehicle 100 meets the standby requirements.

The power grid PG (external power supply) is not limited to a large-scale AC grid provided by an electric power company, and may be a microgrid or a direct current (DC) grid. The configuration of the management system is not limited to the configuration shown in FIG. 1. Another server (e.g., a server of a higher-level aggregator) may be provided between the server 700 and the server 200. The server 200 may communicate with the server 700 via another server. The functions of the server 500 may be implemented in the server 200 and the server 500 may be omitted. The server 200 may wirelessly communicate directly with the vehicle group 1. In the above embodiment, the on-premise servers (servers 200, 500 shown in FIG. 1) function as management computers. However, the present disclosure is not limited to this, and the functions of the servers 200, 500 (particularly the functions related to incentive management) may be implemented in a cloud by cloud computing. The management device 1000 may belong to other electric utility (e.g., a transmission system operator (TSO)) rather than to the aggregator.

At least a part of the functions of the mobile terminal UT may be implemented in the vehicle 100 (electric power device). For example, the classification unit 410, the display unit 420, and the charge and discharge unit 430 may be mounted on the HMI 81 or NAVI 82 of the vehicle 100 rather than on the mobile terminal UT. In this form, the HMI 81 or the NAVI 82 functions as a display device. Alternatively, the mobile terminal UT and the HMI 81 or NAVI 82 may cooperate with each other to function as a display device.

The configuration of the vehicle is not limited to the configuration described above (see FIG. 2). The vehicle may include a charger (charge circuit) instead of the charger-discharger. The vehicle may include a discharger instead of the charger-discharger. The vehicle may output the power discharged from the in-vehicle battery to an external power supply via a discharge connector rather than via an EVSE unit. The in-vehicle battery may be a replaceable battery. The vehicle (electric power device) may be an xEV other than BEV (PHEV, FCEV, range extender EV, etc.).

The vehicle may be contactlessly rechargeable. The vehicle may be equipped with a solar panel. The vehicle may be configured to perform autonomous driving or may have a flight function. The vehicle is not limited to a passenger car, and may be a bus or a truck or may be a railroad car. The vehicle may be a Mobility-as-a-Service (MaaS) vehicle. MaaS vehicles are vehicles that are managed by a MaaS operator. The vehicle may be a vehicle that can travel unmanned (e.g., robotaxi, automated guided vehicle (AGV), or agricultural machine). The vehicle may be an unmanned or single-seater small-sized BEV (e.g., Micro Pallete).

The electric power device may be a moving object other than the vehicle (ship, airplane, drone, walking robot, robot cleaner, space probe, etc.). The electric power device may be an electric machine or appliance (lighting device, air conditioning equipment, cooking appliance, television, refrigerator, washing machine, etc.), or may be at least one of an stationary energy storage and power generation equipment that are used in a building (house, factory, etc.) or outdoors.

The various modifications described above may be implemented in any combination.
The embodiment disclosed herein should be considered to be illustrative and not restrictive in all respects. The scope of the present invention is shown by the claims rather than by the above description of the embodiment and is intended to include all modifications within the meaning and scope equivalent to the claims.

## Claims

1. A management system comprising:
a management device (1000) that manages incentives given to an administrator who manages an electric power device that is electrically connectable to an external power supply; and
a display device that displays the incentives received from the management device (1000), wherein:
the management device (1000) includes
a storage unit (210) that stores data on the incentives of the administrator, and
an update unit (220) that updates the data stored in the storage unit in such a manner that, when the electric power device meets a predetermined requirement, an incentive corresponding to the predetermined requirement that is met is given to the administrator; and
the display device includes
a classification unit (410) that classifies the incentives earned by the administrator according to situations, and
a first display unit that displays the incentives classified according to the situations by the classification unit (410) in such a manner that the incentives for each of the situations are identifiable.

2. The management system according to claim 1, wherein:
the electric power device is a moving object equipped with an energy storage device;
the update unit (220) gives a first incentive to the administrator when the moving object is electrically connected to the external power supply;
the update unit (220) gives a second incentive to the administrator when the moving object electrically connected to the external power supply performs power balancing of the external power supply; and
the first display unit displays the first incentive and the second incentive in such a manner that the first incentive and the second incentive are respectively identifiable.

3. The management system according to claim 1, wherein:
the external power supply is a power grid (PG);
the electric power device is a vehicle (100) including a charge port through which power from outside the vehicle is input, an energy storage device, and a charge circuit that charges the energy storage device with the power input through the charge port;
the display device is mounted on a mobile terminal (UT) of the administrator or on the vehicle (100);
the update unit (220) gives a first incentive to the administrator when the charge port is electrically connected to the power grid (PG);
the update unit (220) gives a second incentive to the administrator when the vehicle (100) with the charge port electrically connected to the power grid (PG) charges the energy storage device to perform power balancing of the power grid (PG); and
the first display unit displays the first incentive and the second incentive in such a manner that the first incentive and the second incentive are respectively identifiable.

4. The management system according to claim 3, wherein:
the vehicle (100) includes a discharge port through which power is output to outside the vehicle and a discharge circuit that discharges power in the energy storage device to outside the vehicle through the discharge port;
the update unit (220) gives a third incentive to the administrator when the vehicle (100) with the discharge port electrically connected to the power grid (PG) discharges the energy storage device to perform power balancing of the power grid (PG); and
the first display unit displays the second incentive and the third incentive in such a manner that the second incentive and the third incentive are respectively identifiable.

5. The management system according to claim 3 or 4, wherein:
the vehicle (100) further includes a control device that controls the charge circuit;
the control device permits remote charge control of the energy storage device by the management device (1000) in a predetermined charge mode;
the management device (1000) determines a charge schedule for the predetermined charge mode, and sends to the display device the charge schedule that is determined; and
the display device further includes a second display unit that displays the charge schedule.

6. The management system according to claim 5, wherein:
the management device (1000) further includes a prediction unit (230) that performs movement prediction of the vehicle;
the predetermined charge mode includes a first charge mode and a second charge mode; and
the management device (1000) determines the charge schedule for the first charge mode without using a result of the movement prediction, and determines the charge schedule for the second charge mode by using the result of the movement prediction.

7. The management system according to any one of claims 1 to 6, wherein:
the management device (1000) sends to the display device a recommended charge timeframe in which an incentive is expected to be earned for charging the electric power device; and
the display device further includes a third display unit that displays the recommended charge timeframe received from the management device (1000).

8. The management system according to any one of claims 1 to 7, wherein the display device further includes a fourth display unit that displays a maximum incentive estimated to have been earnable by the administrator and cause why the incentives earned by the administrator did not reach the maximum incentive.

9. A display device that displays incentives given to an administrator who manages an electric power device that is available for power balancing, the display device comprising:
a classification unit (410) that classifies the incentives earned by the administrator into a first situation incentive earned in a first situation and a second situation incentive earned in a second situation different from the first situation; and
a display unit (420) that displays the first situation incentive and the second situation incentive in such a manner that the first situation incentive and the second situation incentive are respectively identifiable.

10. The display device according to claim 9, wherein:
the first situation is a situation where an incentive is given to the administrator at a first rate; and
the second situation is a situation where an incentive is given to the administrator at a second rate higher than the first rate.

11. The display device according to claim 9, wherein:
the first situation is a situation where the administrator was requested to charge the electric power device; and
the second situation is a situation where the administrator was requested to discharge the electric power device.

12. The display device according to claim 9, wherein:
the first situation is a situation where the electric power device did not perform power balancing; and
the second situation is a situation where the electric power device performed power balancing.

13. An incentive display method comprising:
receiving incentives earned by an administrator who manages an electric power device that is available for power balancing; and
displaying to the administrator the incentives received in such a manner that the incentives for each situation are identifiable.

14. The incentive display method according to claim 13, wherein the incentive display method is performed on a display device, and the incentives are received from a management device.
